# EUROPEAN PATENT SPECIFICATION

(11) **EP 3 693 783 B1**
(45) Date of publication and mention of the grant of the patent: **28.06.2023**
(21) Application number: 18864113.8
(22) Date of filing: 05.10.2018
(51) Int. Cl.: G02B 27/01, B60K 35/00, G08G 1/16

(54) **DISPLAY DEVICE**
ANZEIGEVORRICHTUNG
DISPOSITIF D'AFFICHAGE

(30) Priority: 05.10.2017 JP 2017195300; 25.10.2017 JP 2017206634; 16.11.2017 JP 2017221361
(43) Date of publication of application: 12.08.2020
(73) Proprietor: Konica Minolta, Inc., Tokyo 100-7015 (JP)
(72) Inventor: NOMURA, Eiji, Tokyo 100-7015 (JP); NAKAMURA, Akihiro, Tokyo 100-7015 (JP); SUGAWARA, Kazuhiro, Tokyo 100-7015 (JP); HASHIMURA, Junji, Tokyo 100-7015 (JP); YAMADA, Norihide, Tokyo 100-7015 (JP); KOJIMA, Toshiyuki, Tokyo 100-7015 (JP)
(74) Representative: MFG Patentanwälte Meyer-Wildhagen Meggle-Freund Gerhard PartG mbB
(86) International application number: PCT/JP2018/037491
(87) International publication number: WO 2019/070080

(56) References cited:
- EP-A2- 0 758 778
- EP-B1- 0 758 778
- WO-A1-2017/125974
- WO-A1-2017/134876
- WO-A2-2012/076954
- JP-A- H03 126 910
- JP-A- H04 289 845
- JP-A- S58 145 914
- JP-A- 2013 073 204
- JP-A- 2013 073 229
- JP-A- 2013 073 229
- US-A1- 2016 266 477

## Description

### Technical Field

The present invention relates to a head-up display device and other display devices in which a projection position of a virtual image is set to be variable.

### Background Art

A conventional head-up display (hereinafter also referred to as a HUD) device generally generates a virtual image at a certain distance from a driver, and display content is limited to a vehicle speed, car navigation information, etc. In the first place, the purpose of mounting the HUD device on a vehicle is to support safer driving by minimizing gaze movement of the driver. However, in the sense of safe driving support, the display content described above is insufficient. For example, it is more preferable to adopt a system that detects a vehicle, a pedestrian, an obstacle, etc. at a front using a camera or other sensors and allows the driver to detect danger in advance through the HUD device to prevent accidents beforehand. To implement such a system, it is conceivable to superimpose and display a frame-shaped danger signal on a vehicle, a person, an obstacle, etc. (see Patent Literature 1). However, when a distance from the driver to the virtual image is constant, in a case where a position of eyes of the driver is shifted, a positional relationship between an actual object and the danger signal is shifted. In a case where the shift is excessive, there is a problem of a mistaken recognition by the driver.

As a HUD device that changes a display distance of the virtual image, there is a known HUD device which includes scanning type image forming means, a diffusion screen, projection means, and movable means that changes a position of the diffusion screen, and changes the diffusion screen position to change a projection position of a virtual image in a depth direction (see Patent Literature 2). This HUD device reduces gaze movement of the driver by decreasing or increasing a display distance of the virtual image considering that a human gazing distance changes with the speed of the case, and does not attempt to adjust a display position of the virtual image for an object such as a vehicle, a person, an obstacle, etc. The Japanese patent application publication JP 2013 073229 A discloses a display device and a method for driving the display device. The European patent application publication EP 0 758 778 A2 discloses a three-dimensional image display. A vehicle information transmission device is known from the International patent application publication WO 2012/076954 A2.

Incidentally, in the case of using the HUD device for the purpose of superimposing the display position of the virtual image on the object such as the vehicle, the person, the obstacle, etc. or displaying the display position near the object to inform the driver of danger, since danger during driving is present regardless of a distance of a line of sight, it is preferable that the danger signal can be displayed simultaneously at a long distance and a short distance. To this end, it is conceivable that the diffusion screen is driven at high speed, and an image synchronized with the diffusion screen is generated by the image forming means, so that the image is displayed to the human eyes as if displayed simultaneously. However, in the HUD device as described in Patent Literature 2, there is a description of a mechanism for moving the position of the diffusion screen. However, there is no description of a device for moving the diffusion screen at high speed for simultaneous display. Further, since it is difficult for the scanning type image forming means to cope with display switching at a high frame rate, it is not suitable for a configuration in which virtual images are simultaneously displayed at a plurality of distances.

### Citation List

### Patent Literature

Patent Literature 1: JP 2015-127160 A
Patent Literature 2: JP 2009-150947 A

### Summary of Invention

An object of the invention is to provide a display device that can display a virtual image having a different display position including a depth direction while changing the virtual image at high speed.

To achieve at least one of the above objects, a virtual image display device in accordance with independent claim 1 reflecting one aspect of the invention is provided.

### Brief Description of Drawings

Fig. 1A is a side sectional view illustrating a state in which a display device or a head-up display device of a first embodiment is mounted on a vehicle body, and Fig. 1B is a front view for description of the head-up display device as viewed from the inside of the vehicle.
Fig. 2 is an enlarged side sectional view for description of a specific configuration example of a projection optical system etc. included in the head-up display device.
Figs. 3A and 3B are a partially broken plan view and a partially broken side view for description of a structure of a diffusion unit incorporating an intermediate screen, and Fig. 3C is a perspective view illustrating a rotating body in the diffusion unit.
Figs. 4A and 4B are side views for description of setting of a reference axis of the rotating body, and Fig. 4C is a diagram for description of movement of a functional area with rotation of the intermediate screen.
Fig. 5 is a diagram specifically illustrating a change in a position of an intermediate image.
Fig. 6 is a diagram illustrating a relationship between the position of the intermediate image and a projection distance, and a diagram for description of a display zone and a distance zone.
Fig. 7 is a block diagram for description of an overall structure of the head-up display device.
Fig. 8 is a perspective view for description of a specific display state.
Fig. 9A corresponds to Fig. 5, and Figs. 9B to 9D correspond to a projection image or a frame of Fig. 8.
Fig. 10 is a diagram for description of an operation example of the head-up display device illustrated in Fig. 7.
Fig. 11 is a conceptual diagram for description of an example of display switching in the display zone.
Fig. 12 is a diagram for description of an image display device incorporated in a display device or a head-up display device of a second embodiment.
Fig. 13 is a diagram for description of an image display device incorporated in a display device or a head-up display device of a third embodiment.
Fig. 14 is a diagram for description of an image display device incorporated in a display device or a head-up display device of a fourth embodiment.
Figs. 15A and 15B are diagrams for description of an image display device incorporated in a display device or a head-up display device of a fifth embodiment.
Fig. 16 is a diagram for description of an image display device incorporated in a display device or a head-up display device of a sixth embodiment.
Fig. 17 is an enlarged side sectional view for description of a specific configuration example of a projection optical system etc. included in a display device or a head-up display device of a seventh embodiment.
Figs. 18A and 18B are a partially broken plan view and a partially broken side view for description of a structure of the diffusion unit incorporating the intermediate screen.
Fig. 19 is a diagram for description of movement of the functional area accompanying rotation of the intermediate screen.
Fig. 20 is a diagram specifically illustrating a change in a position of an intermediate image.
Fig. 21A illustrates a relationship between the position of the intermediate image and a projection distance, and Fig. 21B is a diagram for description of a display zone.
Fig. 22A is an enlarged side view for description of a specific shape of a step portion provided in the diffusion unit, and Fig. 22B is an enlarged plan view of the step portion.
Fig. 23A corresponds to Fig. 20, and Figs. 23B to 23D correspond to a projection image or a frame of Fig. 8.
Fig. 24 is a conceptual diagram for description of an example of display switching in the display zone.
Fig. 25 is a diagram for description of an image display device incorporated in a head-up display device of an eighth embodiment.
Fig. 26 is a diagram for description of an image display device incorporated in a head-up display device of a ninth embodiment.
Fig. 27 is a diagram for description of an image display device incorporated in a head-up display device of a tenth embodiment.
Fig. 28 is a diagram for description of an image display device incorporated in a head-up display device of an eleventh embodiment.
Figs. 29A and 29B are a partially broken plan view and a partially broken side view for description of a structure of a diffusion unit incorporating an intermediate screen of a display device of a twelfth embodiment.
Fig. 30 is a diagram specifically illustrating a change in a position of an intermediate image.
Fig. 31A illustrates a relationship between the position of the intermediate image and a projection distance, and Fig. 31B is a diagram for description of a display zone.
Fig. 32A corresponds to Fig. 30, and Figs. 32B to 32D correspond to the projection image or the frame of Fig. 8.
Fig. 33 is a conceptual diagram for description of an example of display switching in the display zone.
Fig. 34 is a diagram for description of an image display device incorporated in a head-up display device of a thirteenth embodiment.
Fig. 35A is a plan view for description of a modification of the rotating body, and Fig. 35B is a side view for description of a modification of the rotating body.

### Description of Embodiments

### [First Embodiment]

Hereinafter, a head-up display device as a display device according to a first embodiment of the invention will be described with reference to drawings.

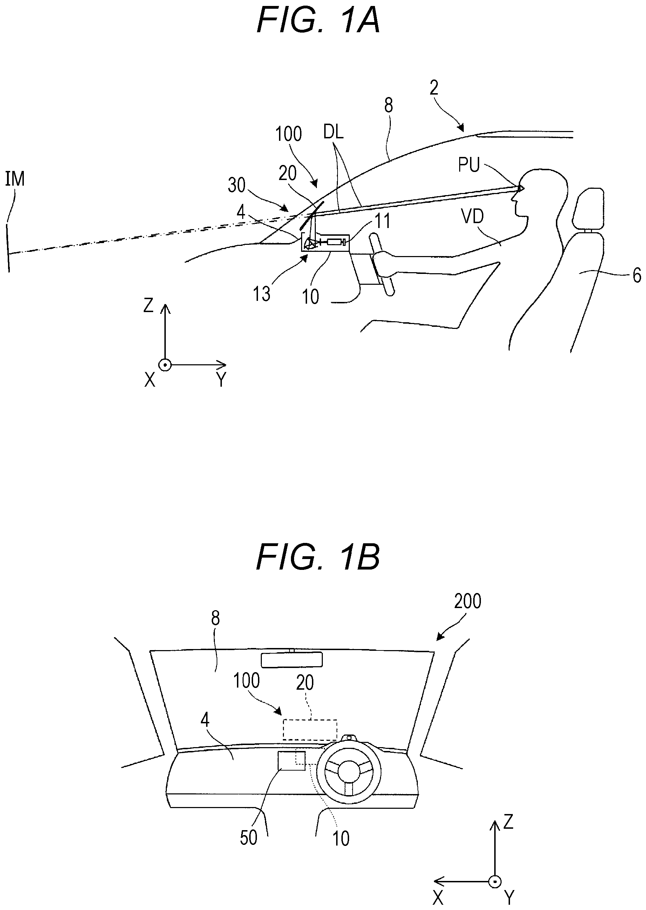

Figs. 1A and 1B are a conceptual side sectional view and a front view for description of an image display device 100 in a head-up display device as a display device of the embodiment. The image display device 100 is mounted, for example, in a vehicle body 2 of an automobile, and includes a projection unit 10 and a display screen 20. The image display device 100 displays a virtual image of image information displayed on a later-described drawing device 11 in the projection unit 10 toward a driver VD via the display screen 20, and may be referred to as a display device.

The projection unit 10 of the image display device 100 is installed to be embedded in a dashboard 4 of the vehicle body 2 and behind a display 50, and emits display light DL, which is image light corresponding to an image including driving-related information etc., toward the display screen 20. The display screen 20 is also called a combiner and is a semi-transparent concave mirror or plane mirror. The display screen 20 is erected on the dashboard 4 by supporting of a lower end, and reflects display light (image light) DL from the projection unit 10 toward a rear of the vehicle body 2. That is, in the illustrated case, the display screen 20 is an independent type that is installed separately from a front window 8. The display light DL reflected on the display screen 20 is guided to an eye box (not illustrated) corresponding to a pupil PU of the driver VD sitting in the driver seat 6 and a peripheral position thereof. The driver VD can observe the display light DL reflected on the display screen 20, that is, a projection image IM as a virtual image in front of the vehicle body 2. Meanwhile, the driver VD can observe external light transmitted through the display screen 20, that is, a real image of a front view, an automobile, etc. As a result, the driver VD can observe a projection image (virtual image) IM, which is superimposed on an external world image or a see-through image behind the display screen 20, including relevant information such as the driving-related information formed by reflection of the display light DL on the display screen 20.

Here, the display screen 20 is configured separately from the front window 8. However, the front window 8 may be used as a display screen, and projection may be performed on a display range set in the front window 8, so that the driver VD can observe the projection image IM. In this instance, a reflection area can be ensured by changing the reflectance of a partial area of glass of the front window 8 using a coat etc. In addition, when a reflection angle at the front window 8 is, for example, about 60 degrees, the reflectance is ensured at about 15%. In particular, even when the coat is not provided, use as a transmissive reflecting surface is allowed. In addition, the display screen may be provided by being sandwiched in the glass of the front window 8.

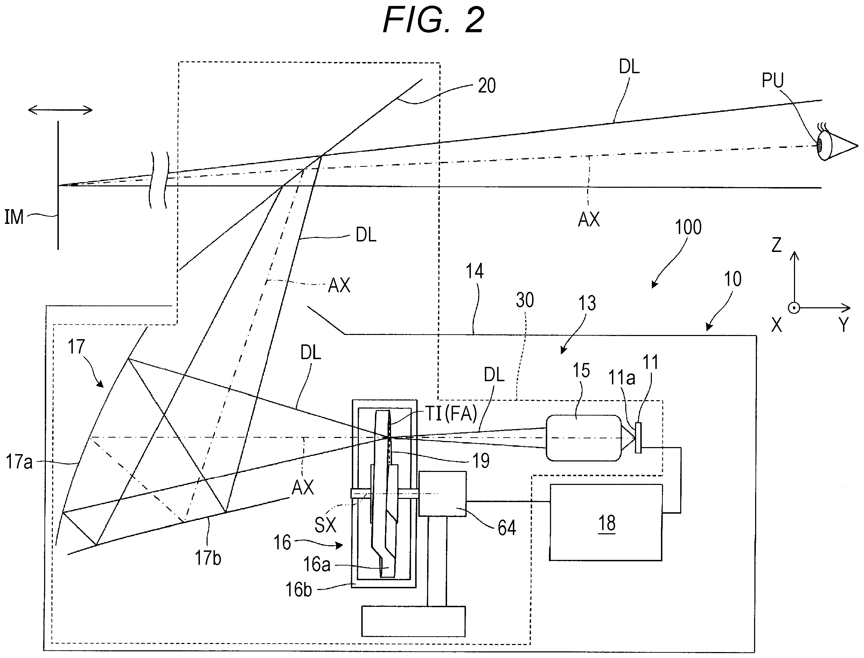

As illustrated in Fig. 2, the projection unit 10 includes a main body optical system 13 corresponding to a virtual image type enlarged imaging system that includes the drawing device 11, a display controller 18 that operates the main body optical system 13, and a housing 14 that stores the main body optical system 13 etc. Among these units, a combination of the main body optical system 13 and the display screen 20 is included in a display optical system 30.

In addition to the drawing device 11, the main body optical system 13 includes an imaging optical system 15 corresponding to a first projection optical system that forms an intermediate image TI obtained by enlarging an image formed on the drawing device 11, a virtual image formation optical system 17 corresponding to a second projection optical system that converts the intermediate image TI into a virtual image, and a diffusion unit 16 disposed between both the optical systems 15 and 17 for projection.

The drawing device 11 is a display element having a two-dimensional (2D) display surface 11a. An image formed on the display surface 11a of the drawing device (display element) 11 is enlarged by the imaging optical system (first projection optical system) 15 and projected onto a spiral surface-shaped intermediate screen 19 provided in the diffusion unit 16. In this instance, by using the drawing device 11 capable of performing 2D display, switching of the projection image onto the intermediate screen 19, that is, switching of the projection image IM displayed as a virtual image through the display screen 20, can be performed at relatively high speed. The drawing device 11 may correspond to a reflective element such as DMD or LCOS, or a transmissive element such as liquid crystal. In particular, when DMD or LCOS is used as the drawing device 11, it is easy to switch images at high speed while maintaining brightness (including high-speed intermittent display), which is advantageous for display in which a virtual image distance or a projection distance is changed. In the case of changing the display distance or the projection distance, the drawing device 11 operates at a frame rate of 30 fps or more, more preferably 60 fps or more, for each projection distance. In this way, a plurality of projection images (virtual images) IM at different projection distances can be viewed such that the projection images (virtual images) IM are simultaneously displayed to the driver VD. In particular, in the case of switching display at 90 fps or more, DMD or LCOS corresponds to a candidate for the drawing device 11.

The diffusion unit 16 is disposed at a projection position or an imaging position by the imaging optical system (first projection optical system) 15 (that is, a planned imaging position of an intermediate image or a vicinity thereof), includes a rotating body 16a and a hollow frame body 16b, and is driven by a rotation drive unit (drive unit) 64 to rotate around the reference axis SX at a constant speed, for example.

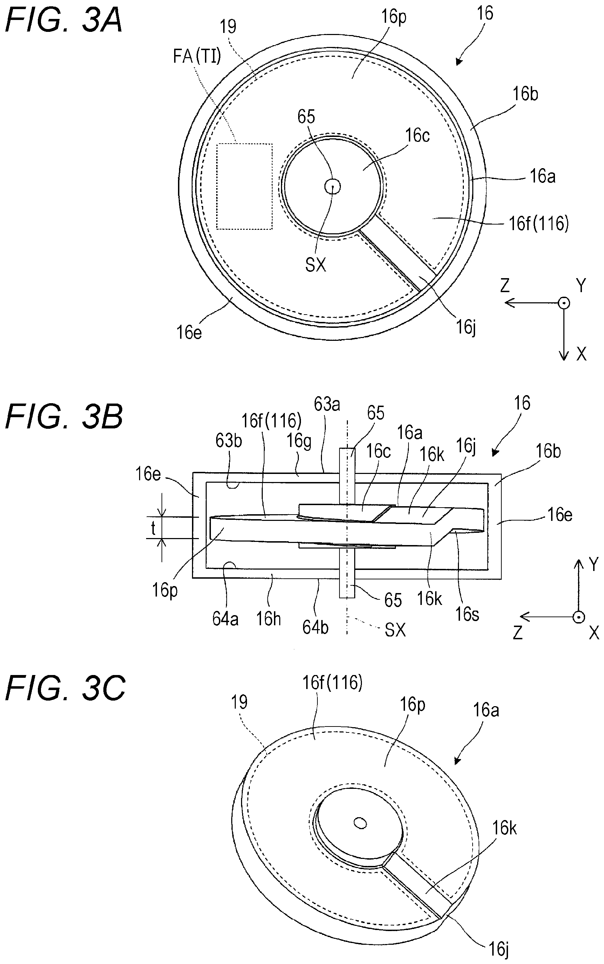

Fig. 3A is a front view for description of the diffusion unit 16, Fig. 3B is a side sectional view for description of the diffusion unit 16, and Fig. 3C is a perspective view for description of the rotating body 16a in the diffusion unit 16. The diffusion unit 16 includes the spiral rotating body 16a having an outline close to a disc as a whole, and the cylindrical hollow frame body 16b that houses the rotating body 16a.

The rotating body 16a has a central portion 16c and an outer peripheral optical portion 16p. One surface 16f formed on the outer peripheral optical portion 16p of the rotating body 16a is formed as a smooth surface or an optical surface, and the intermediate screen 19 is formed over the entire surface on the surface 16f. The surface 16f of the rotating body 16a functions as a three-dimensional (3D) shape portion 116. The intermediate screen 19 is a diffusion plate whose light distribution angle is adjusted to a desired angle. The intermediate screen 19 can be a sheet attached to the rotating body 16a, and may be a fine uneven pattern formed on the surface of the rotating body 16a. Further, the intermediate screen 19 may be formed so as to be embedded inside the rotating body 16a. The intermediate screen 19 forms the intermediate image TI by diffusing the incident display light DL (see Fig. 2). The other surface 16s formed on the outer peripheral optical portion 16p of the rotating body 16a is formed as a smooth surface or an optical surface. The rotating body 16a is a spiral member having optical transparency, and a pair of surfaces 16f, 16s is a spiral surface having the reference axis SX as a spiral axis. As a result, the intermediate screen 19 formed on one surface 16f is formed along a continuous spiral surface. The intermediate screen 19 is formed in a range corresponding to one cycle of the spiral. In other words, the 3D shape portion 116 has one spiral pattern in one rotation or one cycle, and the intermediate screen 19 is formed in a range corresponding to the spiral pattern. That is, the intermediate screen 19 is formed in a range of one spiral pitch. As a result, an inter-cycle step (step) 16j is formed at one location along a circumference of the diffusion unit 16, and the inter-cycle step 16j gives a distance difference or pitch of 30 mm or less in an optical axis AX direction or a reference axis SX direction at a position corresponding to a spiral end (an end of the 3D shape portion 116). By the inter-cycle step 16j, a position of a functional area FA of the intermediate screen 19 described later in the optical axis AX direction can be changed partly discontinuously and periodically. When the inter-cycle step 16j is set within 30 mm, it is possible to reduce shape asymmetry of the rotating body 16a occurring in the 3D shape portion 116, and it is possible to easily ensure flatness of the intermediate screen 19 and stability of rotation of the rotating body 16a. The inter-cycle step 16j has a connection surface 16k which connects steps between spiral ends and is inclined with respect to a plane including the reference axis SX around which the diffusion unit 16 is rotated. In this way, it is possible to suppress generation of sound due to rotation of the rotating body 16a and to stabilize rotation of the rotating body 16a. As described above, since the pair of surfaces 16f and 16s of the rotating body 16a corresponds to a spiral surface having the reference axis SX as a spiral axis, the rotating body 16a has substantially the same thickness t with respect to the reference axis SX or optical axis AX direction. In this way, a length of an optical path passing through the rotating body 16a is kept constant, and thus adjustment of the imaging position is facilitated.

In the rotating body 16a, one position along a circumferential direction corresponds to the functional area FA through which the optical axis AX of the main body optical system 13 passes, and the intermediate image TI is formed by a portion of the intermediate screen 19 in the functional area FA. The functional area FA moves at a constant speed on the rotating body 16a as the rotating body 16a rotates. In other words, when the rotating body 16a is rotated while causing the display light (image light) DL to enter the functional area FA corresponding to a portion thereof, the position of the functional area FA or the intermediate image TI moves along the optical axis AX (When display of the drawing device 11 is not operating, an intermediate image as a display may not be formed. However, a position where the intermediate image will be formed is also referred to as a position of the intermediate image.). When the continuously changing 3D shape portion 116 of the intermediate screen 19 is formed along a continuous spiral surface, the functional area FA of the intermediate screen 19 moves on the spiral surface as the intermediate screen 19 rotates. The intermediate screen 19 is formed in a range corresponding to one cycle, and one rotation of the intermediate screen 19 moves the functional area FA of the intermediate screen 19 from one end position to the other end position of a movable range in the optical axis AX direction. In this instance, movement corresponds to one rotation and one cycle. In the illustrated example, since the intermediate screen 19 is formed in a range corresponding to one cycle of the spiral, the functional area FA or the intermediate image TI of the intermediate screen 19 moves by a distance corresponding to the step in the optical axis AX direction with one rotation of the rotating body 16a. Note that the imaging optical system (first projection optical system) 15 has a predetermined depth of focus equal to or larger than a movement range of the functional area FA so that defocus does not occur depending on the position of the intermediate screen 19. Alternatively, an image without blur can be obtained by providing the imaging optical system 15 as the first projection optical system with a focusing function.

The hollow frame body 16b has a cylindrical outer outline, and includes a side surface portion 16e and a pair of end surface portions 16g and 16h. The side surface portion 16e and the pair of end surface portions 16g and 16h are formed of the same material having optical transparency. However, the side surface portion 16e may not have optical transparency. Main surfaces 63a and 63b of one end surface portion 16g are smooth surfaces or optical surfaces parallel to each other, and main surfaces 64a and 64b of the other end surface portion 16h are smooth surfaces or optical surfaces parallel to each other. Here, the main surfaces 63a, 63b or the main surfaces 64a, 64b may not correspond to parallel planes. When at least a range corresponding to the functional area FA is set to a free-form surface shape or an aspheric surface shape, it is possible to ensure image performance such as distortion, an image surface property, etc. required for the optical system, for example, even in a high-magnification optical system in which it is difficult to ensure performance. Thus, a desired surface shape may be selected as needed. The rotating body 16a in the hollow frame body 16b is fixed to the hollow frame body 16b via a pair of central shaft portions 65, and the hollow frame body 16b and the rotating body 16a rotate integrally around the reference axis SX. By disposing the rotating body 16a provided with the intermediate screen 19 in die hollow frame body 16b in this manner, it is possible to inhibit dust etc. from adhering to the rotating body 16a, it is possible to suppress generation of sound due to rotation of the rotating body 16a, and it becomes easy to stabilize rotation of the rotating body 16a at a high speed. Note that the rotating body 16a may be fixed to the hollow frame body 16b at an outer peripheral portion thereof. In this case, it is easy to reduce the thickness t of the rotating body 16a.

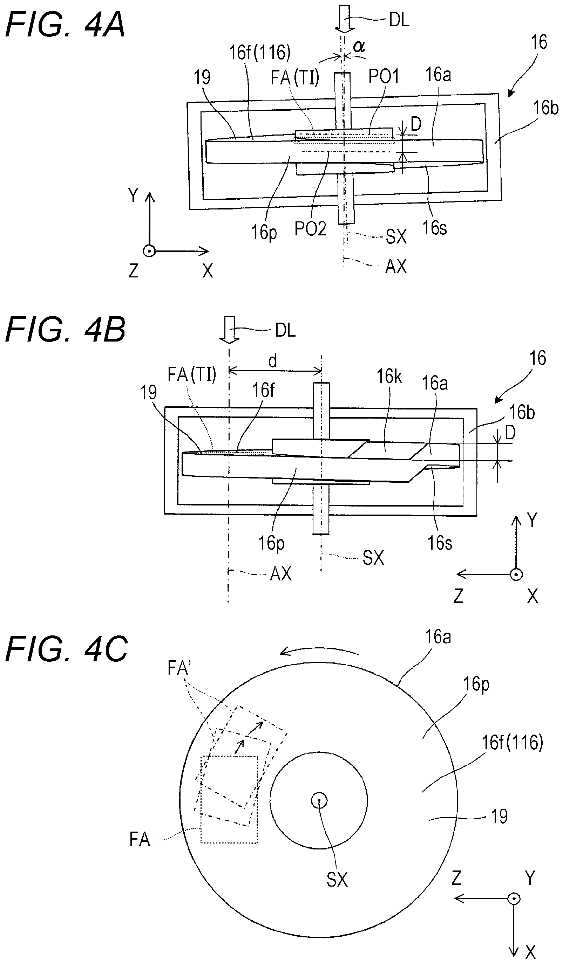

A description will be given of setting of the reference axis SX of the rotating body 16a (or the 3D shape portion 116) with reference to Fig. 4A and Fig. 4B. The reference axis SX of the rotating body 16a is an axis of the 3D shape portion 116, and is disposed to be slightly inclined with respect to the optical axis AX direction. In other words, the reference axis SX is disposed to be slightly inclined in a state not parallel to the optical axis AX of the main body optical system 13. Here, the intermediate screen 19 on the rotating body 16a is disposed such that the local functional area FA is substantially orthogonal to the optical axis AX direction of the main body optical system 13. As a result, the inclination of the intermediate image TI with respect to the optical axis AX is set to a desired state, and the inclination of the intermediate image TI with respect to the optical axis AX can be reduced. That is, in the case of observing the rotating body 16a from a viewpoint separated from the optical axis AX in a lateral direction having the functional area FA as illustrated in Fig. 4A, the reference axis SX is inclined by a predetermined angle α with respect to the optical axis AX. In the case of observing from a viewpoint separated from the rotating body 16a as a reference in a direction orthogonal to the case of Fig. 4A as illustrated in Fig. 4B, the reference axis SX is separated from the optical axis AX by a predetermined distance d. When such a configuration is adopted, for example, it is possible to correct inclination of a virtual image projection distance in a left-right direction of the screen occurring when the reference axis SX corresponding to a rotation axis of the rotating body is made coincide with the optical axis AX direction in the 3D shape portion 116 having a spiral structure as in the present embodiment. Note that in Fig. 4A, a first position PO1 indicated by a dashed line indicates a case where the functional area FA or the intermediate image TI is located on the most upstream side of the optical path. Similarly, a second position PO2 indicated by a dashed line indicates a case where the functional area FA or the intermediate image TI is located on the most downstream side of the optical path. A distance D between these positions PO1 and PO2 corresponds to the amount of displacement of the functional area FA or the intermediate image TI in the optical axis AX direction.

In the present embodiment, the reference axis SX is inclined with respect to the optical axis AX. However, as in a case where inclination of a spiral shape of the 3D shape portion 116 differs depending on the location, the case of using a combination of a spiral shape and a flat plate, the case of a 3D shape in which an inclination direction changes etc., when the shape is formed such that the inclination of the 3D shape portion 116 is constant or not substantially constant, there is a possibility that a part where the intermediate screen is further inclined may occur in a partial area of the intermediate screen due to an adverse effect of the inclination. In such a case, a configuration may be adopted such that the optical axis AX and the reference axis SX are made to coincide with each other without intentionally providing an inclination.

Returning to Fig. 2, by rotating the diffusion unit 16 around the reference axis SX at a constant speed using the rotation drive unit 64, a position where the intermediate screen 19 (or the 3D shape portion 116) of the rotating body 16a intersects the optical axis AX (that is, the functional area FA) moves in the optical axis AX direction. That is, as illustrated in Fig. 4C, as the rotating body 16a rotates, the functional area FA on the intermediate screen 19 is successively shifted to, for example, an adjacent functional area FA' set at a position shifted at an equal angle, and moves in the optical axis AX direction. By moving the functional area FA in the optical axis AX direction, the position of the intermediate image TI can be moved in die optical axis AX direction. Even though details will be described later, for example, by moving the position of the intermediate image TI to the virtual image formation optical system 17 side, it is possible to reduce the projection distance or the virtual image distance to the projection image IM. Further, by moving the position of the intermediate image TI to the drawing device (display element) 11 side, it is possible to increase the projection distance or the virtual image distance to the projection image IM.

The virtual image formation optical system (second projection optical system) 17 enlarges the intermediate image TI formed by the imaging optical system (first projection optical system) 15 in cooperation with the display screen 20, and forms the projection image IM as a virtual image in front of the driver VD. The virtual image formation optical system 17 includes at least one mirror, and includes two mirrors 17a and 17b in the illustrated example. The virtual image formation optical system (second projection optical system) 17 can have an optical property to correct the curvature of the intermediate screen 19 in the functional area FA of the rotating body 16a (that is, the curvature of the intermediate image TI).

In the image display device 100 illustrated in Fig. 2 etc., when the rotation drive unit 64 is operated under the control of the display controller 18, the diffusion unit 16 rotates around the reference axis SX so that the position of the intermediate image TI periodically and repeatedly moves in the optical axis AX direction, and it is possible to increase or decrease a distance between the projection image IM as a virtual image formed behind the display screen 20 by the virtual image formation optical system 17 and the driver VD as an observer. In this way, when the position of the projection image IM to be projected is changed back and forth, and display content by the drawing device (display element) 11 is made to correspond to the position thereof under the control of the display controller 18, display content of the projection image IM is changed while changing the projection distance or the virtual image distance to the projection image 1M, and the projection image IM as a series of projection images can be made three-dimensional. Note that even when the functional area FA moves in the optical axis AX direction, the curved state of the intermediate screen 19 in the functional area FA is maintained, and thus the effect of correction by the virtual image formation optical system (second projection optical system) 17 is maintained regardless of the position of the projection image IM.

It is desirable that a rotation speed of the diffusion unit 16 or the rotating body 16a or a moving speed of the functional area FA is a speed at which the projection image IM as a virtual image can be viewed as if the projection image IM is simultaneously displayed at a plurality of locations or at a plurality of projection distances. Here, when the projection image IM of each display zone is switched at 30 fps or more, preferably at 60 fps or more, a plurality of displayed images is recognized as continuous images. For example, when the drawing device 11 performs display at 200 fps on the assumption that the projection image IM is successively projected in five stages from a short distance to a long distance in accordance with the operation of the diffusion unit 16, display of the projection image IM at each distance (for example, short distance) is switched at 40 fps, projection images IM at respective distances are performed in parallel, and switching is recognized as being substantially continuous.

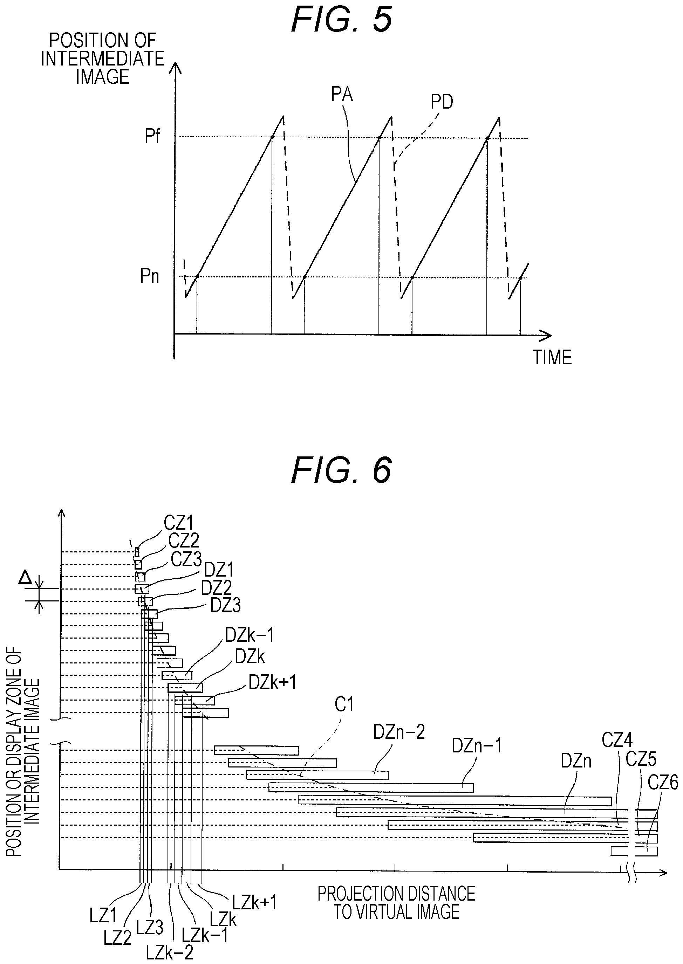

Fig. 5 is a diagram specifically illustrating a change in the position of the intermediate image TI due to the rotation of the diffusion unit 16. The functional area FA of the diffusion unit 16 repeatedly and periodically moves along the optical axis AX direction in a sawtooth-shaped temporal pattern PA. When the drawing device (display element) 11 performs continuous display, the position of the intermediate image TI repeatedly and periodically moves in a sawtooth-shaped temporal pattern PA along the optical axis AX direction as illustrated in the figure. That is, the position of the intermediate image TI changes continuously and periodically with the rotation of the diffusion unit 16, while being discontinuous at a position corresponding to the inter-cycle step 16j. As a result, although not illustrated, the position of the projection image (virtual image) IM repeatedly and periodically moves along the optical axis AX direction similarly to the position of the intermediate image TI even though a scale is different, and the projection distance can be continuously changed. Here, since the drawing device 11 does not perform continuous display, and performs intermittent display while switching the display content, the display position of the intermediate image TI becomes a discrete position on the sawtooth-shaped temporal pattern. Here, in an example illustrated in Fig. 5, the position of the intermediate image TI is changed in a sawtooth shape with a constant slope with respect to time. However, it is desirable to change the position so that the display timing can be controlled, taking into account the rotation of the diffusion unit in addition to the specification of the distance to be displayed. Depending on the specification of the display distance, the change may not have a constant slope.

Here, in the case of displaying an image in a certain distance zone, the displayed distance changes when the position of the intermediate image TI changes within a display time as illustrated in Fig. 5. In this instance, the display distance seen by the observer (driver VD) for the display zone in which the distance changes in such a manner is a substantially average position of the distance that changes within the display time. In consideration of this fact, in the temporal pattern PA, the nearest display position Pn and the farthest display position Pf are set at positions away from both ends of the temporal pattern PA while ensuring a margin. In addition, a break PD of the temporal pattern PA corresponds to the inter-cycle step 16j provided on the rotating body 16a of the diffusion unit 16.

Fig. 6 is a diagram for description of a relationship between the position of the intermediate image TI and the projection distance or the relationship between the position of the intermediate image TI and the display zone. In a case where the intermediate image TI is moved at the same speed in the optical axis AX direction according to a characteristic C1 indicated by the dashed line, when an interval δ of a switching time of each distance zone is set to a constant value, an interval width of the projection distance becomes short in a short distance and becomes long in a long distance. The interval width Δ of the movement of the intermediate image TI corresponds to a switching time of the displayed distance zone.

In a case where the time to move between both ends of the position of the intermediate image TI illustrated in Fig. 5 is considered as one cycle, when the unit of display having a depth is set as a display zone, and the time of one cycle is shorter than the product of the display time of each display zone and the number of display zones n, the display zone spans a plurality of distance zones, and projection distance ranges overlap at least in adjacent display zones (see display zones DZ1 to DZn of Fig. 6). By performing the overlapping display with respect to the projection distance range in this manner, the same projection image (virtual image) IM can be displayed with a spread in the depth direction, it is possible to extend the display time of each display zone compared to a display that does not cause overlap, and luminance of the projection image (virtual image) IM is improved.

As illustrated in Fig. 6, n display zones can be set along the characteristic C1. Here, for convenience of description, the display zone at the shortest distance is referred to as a first display zone DZ1, and the display zone at the longest distance is referred to as an nth display zone DZn (n is a natural number). Display distance widths of the plurality of display zones DZ1 to DZn increase as from a short distance to a long distance. Adjacent display zones among the plurality of display zones DZ1 to DZn have partially overlapping projection distances, and each display zone includes one that needs to originally have a different projection distance. That is, projection distances of a kth display zone DZk (k is a natural number smaller than n) and a (k+1)th display zone DZk+1 partially overlap. For example, projection distances of a second display zone DZ2 and a third display zone DZ3 partially overlap. The kth display zone DZk is a composite projection image in which an original display image at a projection distance of a display target to be displayed therein is displayed together with an image displayed in a display zone set before, after, or both before and after the image. The display zone includes a sub-zone in which the distance to be projected changes gradually. In the illustrated example, display is performed in a state in which respective images corresponding to all distance zones during display of the kth display zone DZk or distance zones corresponding to four sections within a certain period of time, or corresponding to sub-zones LZk-2 to LZk+1 overlap each other. In this case, the display time of the image displayed in each of the display zones DZ1 to DZn is shifted between the display zones DZ1 to DZn adjacent to each other at the pitch of the display time interval δ. Thus, the distance between both ends of the near side and the far side during the display is changed accordingly, and the average distance is changed. Since a human eye or brain captures the display image at the average distance of the display zones DZ1 to DZn, even when display is performed visually at the same time, the display distances of the respective display zones DZ1 to DZn can be displayed as different positions.

When the kth display zone DZk is divided at a timing at which the overlapping distance zone is switched and considered as a series of sub-zones LZk-2 to LZk+1 having different projection distances including a reference sub-zone LZk, the same projection image (virtual image) IM is displayed in each sub-zone by causing the drawing device (display element) 11 to perform a display operation as appropriate. That is, the display zone DZk is configured by a combination of a series of a plurality of sub-zones LZk-2 to LZk+1 whose distance changes stepwise. In other words, a local image to be projected on the distance zone corresponding to one reference sub-zone LZk of interest is repeatedly displayed by overlapping, for example, four display zones, and thus the local image projected on each distance zone has uniformly improved luminance. In this instance, taking into account the change in the projection distance, the common local projection image (virtual image) IM projected on the distance zone (corresponding to the sub-zones LZk-2 to LZk+1) common to the adjacent display zones is superimposed and displayed so that the position and angle size match. In this way, the projection image (virtual image) IM in which the projection distance changes can be displayed without shift or blur. In addition, the display distance at this time is a distance corresponding to the reference sub-zone LZk. In Fig. 6, for convenience of display, each of the display zones DZ1 to DZn is illustrated to extend in the horizontal direction. However, when the vertical axis is set to the position of the intermediate image TI, each of the display zones DZ1 to DZn extends along the characteristic C1.

The display times in the first display zone DZ1 to the nth display zone DZn are all equal. By setting the display time in each of the display zones DZ1 to DZn to the same display time, the display luminance of each of the display zones DZ1 to DZn can be matched, and it is possible to prevent the driver VD as an observer from unintentionally tending to focus on an image at a specific distance.

First to third pre-interpolation zones CZ1 to CZ3 added to the projection at the short distance end are added from a viewpoint of setting the display distance in the first distance zone LZ1 to a desired distance, and may not be used. Similarly, first to third post-interpolation zones CZ4 to CZ6 added to the projection at the long distance end are added from a viewpoint of setting the display distance in the nth distance zone LZn to a desired distance, and may not be used.

In the case of displaying different targets in a specific depth direction on the screen, display targets at different distances are placed at positions overlapping each other or close to each other to substantially overlap each other in a 2D plane other than the depth direction, it is conceivable that interference between these displays will occur, and it is necessary to avoid the occurrence. For example, when a display target present at a different display distance DZk' with respect to a display target in the display zone DZk is located close thereto in the 2D plane, and interference occurs in displays for the respective targets, it is conceivable to perform display to synthesize the displays in an interference area. Specifically, in a common region or an intersection region where a pair of display targets overlap, an image is formed such that the pair of display targets is displayed in a semi-transparent superimposed manner. In a difference area or an independent area where a pair of display targets does not overlap, it is sufficient to perform standard display in each part. Alternatively, it is conceivable to adopt a method of having a different display using a scheme such as color, size (including thickness in the case of a line), brightness, blinking, etc., which may be devised to be transmitted to the driver VD.

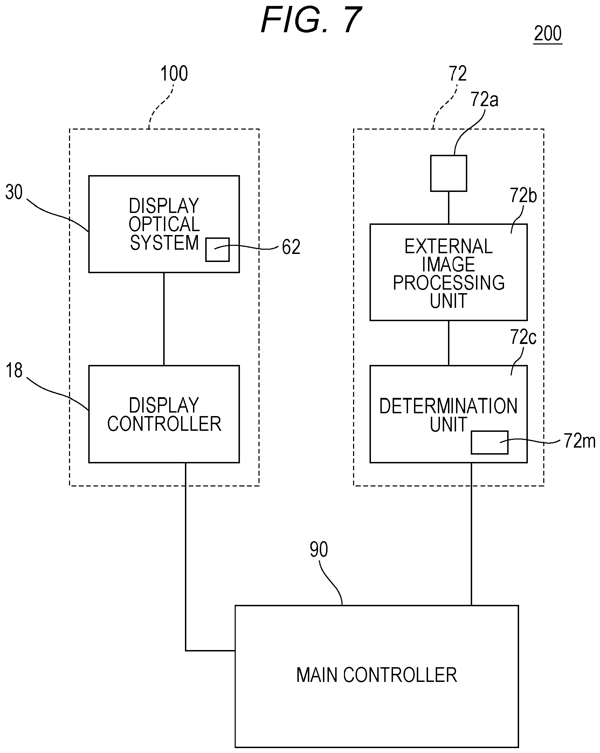

Fig. 7 is a conceptual block diagram for description of an overall structure of a head-up display device 200, and the head-up display device 200 includes the image display device 100 as a part thereof. The image display device 100 has the structure illustrated in Fig. 2, and the description is omitted here.

The head-up display device 200 includes an environment monitoring unit 72 and a main controller 90 in addition to the image display device 100.

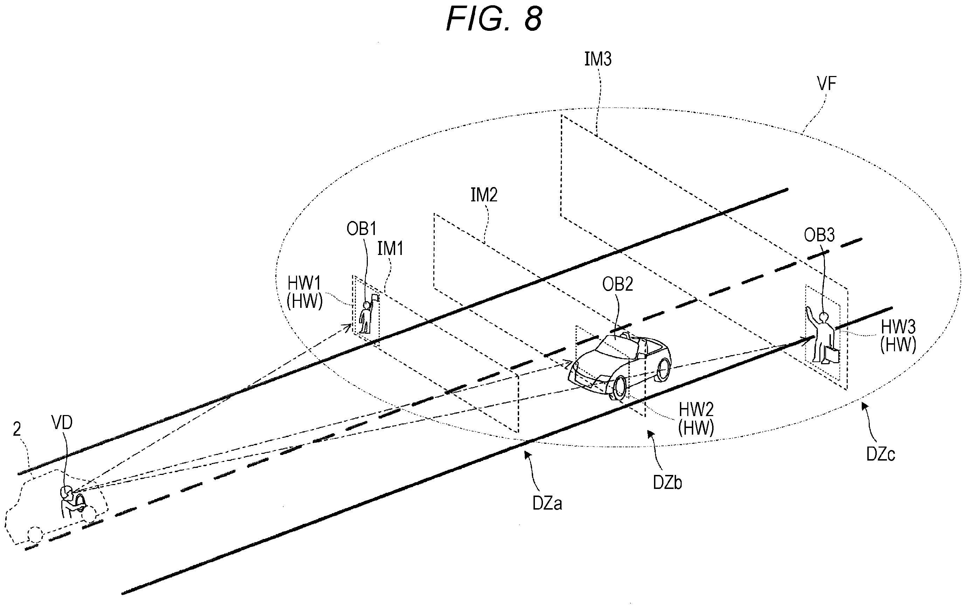

The environment monitoring unit 72 is an object detection unit that detects an object present in a detection area, and includes a 3D measuring device that identifies a moving object or a person, specifically an automobile, a bicycle, a pedestrian, etc., present in front of the unit as an object and extracts 3D position information of the object. The environment monitoring unit (object detection unit) 72 includes an external camera 72a, an external image processing unit 72b, and a determination unit 72c as the 3D measuring device. The external camera 72a enables an external image to be captured in a visible or infrared region. The external camera 72a is installed at an appropriate position inside and outside the vehicle body 2, and captures the driver VD or a detection area VF (see Fig. 8 described later) in front of the front window 8 as an external image. The external image processing unit 72b performs various image processing such as brightness correction on the external image captured by the external camera 72a to facilitate processing by the determination unit 72c. The determination unit 72c extracts or cuts out an object image from the external image passing through the external image processing unit 72b to detect presence of an object such as an automobile, a bicycle, a pedestrian, etc. (specifically, see objects OB 1, OB2, and OB3 of Fig. 8 described later), and calculates a spatial position of the object in front of the vehicle body 2 from depth information attached to the external image, and store the spatial position in a storage unit 72m as 3D position information. The storage unit 72m of the determination unit 72c stores software that enables extraction of an object image from an external image. During an operation of extracting an object image from an external image, necessary software or data is read from the storage unit 72m. By the determination unit 72c, for example, it is possible to detect an element corresponding to an object element from a shape, a size, a color, etc. of each object element in the obtained image. As a criterion at this time, there is a method of performing pattern matching with pre-registered information and detecting a type of the object based on a degree of matching. In addition, from a viewpoint of increasing the processing speed, a lane can be detected from an image, and an object can be detected from the shape, the size, the color, etc. for a target or an object element in the lane.

Although not illustrated, the external camera 72a is, for example, a compound eye type 3D camera. In other words, the external camera 72a is formed by arranging camera elements in which a lens for image formation and a CMOS or another imaging element are paired in a matrix, each of which has a drive circuit for the imaging element. The plurality of camera elements included in the external camera 72a are adapted to detect, for example, relative parallax. By analyzing a state of an image obtained from the camera element (a focus state, a position of the object, etc.), it is possible to determine a target distance to each area or object in an image corresponding to a detection area.

Note that even when a combination of 2D camera and an infrared distance sensor instead of using the compound eye type external camera 72a described above, it is possible to obtain a target distance corresponding to distance information in the depth direction for each part (area or object) in the captured screen. In addition, by a stereo camera in which two 2D cameras are separately disposed instead of using the compound eye type external camera 72a described above, it is possible to obtain a target distance corresponding to distance information in the depth direction for each part (area or object) in the captured screen. In addition, by performing imaging while changing a focal length at high speed in a single 2D camera, it is possible to obtain a target distance corresponding to distance information in the depth direction for each part (area or object) in the captured screen.

In addition, by using a LIDAR technology instead of the compound eye type external camera 72a, it is possible to obtain distance information in the depth direction for each part (area or object) in the detection area. Using the LIDAR technology, it is possible to measure scattered light for pulsed laser irradiation, measure a distance and spread to a distant target, and acquire information about a distance to the object in a field of view and information related to spread of the object. Further, for example, it is possible to improve detection accuracy of the object using a complex scheme that combines a radar sensing technology such as the LIDAR technology with a technology of detecting a distance etc. of the object from image information, that is, a scheme of fusing a plurality of sensors.

An operation speed of the external camera 72a for detecting the object needs to be higher than or equal to the operation speed of the drawing device (display element) 11 from a viewpoint of speeding up the input, and is desirably set to be higher in a case where a display switching speed of the display zones DZ1 to DZn or a one-cycle display period of the display zones DZ1 to DZn is, for example, 30 fps or more. It is desirable that the external camera 72a enables high-speed detection of the object by a high-speed operation, for example, higher than 120 fps, for example, 480 fps or 1,000 fps. In addition, in the case of fusing the plurality of sensors, it is unnecessary that all the sensors are high-speed sensors, and at least one of the plurality of sensors needs to be a high-speed sensor. However, the other sensors may not be high-speed sensors. In this case, it is possible to use a method in which sensing accuracy is increased by using data detected by a high-speed sensor as a basis and complementing the data with data of a non-high-speed sensor.

The display controller 18 operates the display optical system 30 under the control of the main controller 90 to display a 3D projection image IM in which the virtual image distance or the projection distance changes behind the display screen 20.

The main controller 90 has a role of harmonizing operations of the image display device 100, the environment monitoring unit 72, etc. For example, the main controller 90 periodically changes the projection distance of the virtual image, which is the projection image IM, by the display optical system 30 by operating the rotation drive unit 64 via the display controller 18. That is, the main controller 90 etc. periodically changes the projection position in the depth direction of the virtual image that is the projection image IM. In addition, the main controller 90 adjusts spatial arrangement of a frame HW (see Fig. 8) projected by the display optical system 30 so as to correspond to a spatial position of the object detected by the environment monitoring unit 72. That is, the main controller 90 generates the projection image IM to be displayed on the display optical system 30 from display information including a display shape and a display distance received from the environment monitoring unit 72. Display content of the projection image IM is synchronized with the operation of the rotation drive unit 64, that is, synchronized with the movement of the intermediate image TI. For example, the projection image IM can be used as a sign such as the frame HW (see Fig. 8) positioned around the automobile, the bicycle, the pedestrian, and other objects behind the display screen 20 in a depth position direction thereof. The frame HW is displayed without a depth for convenience of description. However, in practice, the frame HW has a certain depth width corresponding to a depth width of the display zones DZ1 to DZn. As described above, the main controller 90 functions as an image adding unit in cooperation with the display controller 18, and a related information image is added to the detected object as a virtual image by the display optical system 30 at a timing when a target distance to the detected object substantially coincides with the projection distance.

Fig. 8 is a perspective view for description of a specific display state. The front of the driver VD, which is the observer, is the detection area VF corresponding to an observation visual field. It is presumed that objects OB1 and OB3 of a person such as a pedestrian and an object OB2 of a moving object such as an automobile are present in the detection area VF, that is, on the road and a periphery thereof. In this case, the main controller 90 causes the image display device 100 to project the 3D projection image (virtual image) IM to add frames HW1, HW2, and HW3 as a related information image to each of the objects OB1, OB2, and OB3. In this instance, since distances from the driver VD to the respective objects OB1, OB2, and OB3 are different from each other, projection distances to the projection images IM1, IM2, and IM3 for displaying the frames HW1, HW2, and HW3 are equivalent to the distances from the driver VD to the respective objects OB1, OB2, and OB3.

The projection distances of the projection images IM1, IM2, and IM3 are formed in display zones DZa to DZc corresponding to some of the display zones DZ1 to DZn illustrated in Fig. 6, and have depth widths corresponding to the respective display zones DZa to DZc. Centers of the respective projection distances, that is, the projection distances of the projection images IM1, IM2, and IM3 are discrete, and may not be exactly matched with actual distances to the objects OB1, OB2, and OB3. However, when the difference between the projection distances of the projection images IM1, IM2, and IM3 and the actual distances to the objects OB1, OB2, and OB3 is not large, parallax hardly occurs even when a viewpoint of the driver VD moves, and it is possible to substantially maintain an arrangement relationship between the objects OB1, OB2, and OB3 and the frames HW1, HW2, and HW3.

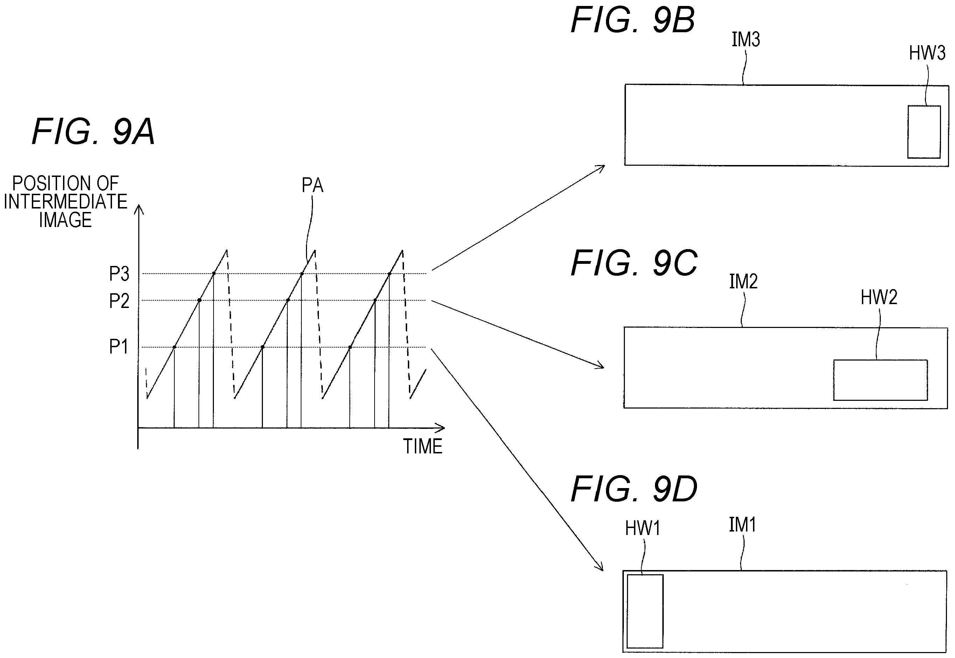

Fig. 9A corresponds to Fig. 5, Fig. 9B corresponds to the projection image IM3 or the frame HW3 of Fig. 8, Fig. 9C corresponds to the projection image IM2 or the frame HW2 of Fig. 8, and Fig. 9D corresponds to the projection image IM1 or the frame HW1 of Fig. 8. As is clear from Figs. 9A to 9D, when the functional area FA or the intermediate image TI of the rotating body 16a (or the 3D shape portion 116) is within a predetermined distance range around a display position P1, specifically, at the time of a display timing of a predetermined display zone determined based on the characteristic C1 illustrated in Fig. 6 according to the predetermined distance range, the projection image IM1 corresponds to a series of display images formed on the display surface 11a of the drawing device (display element) 11. Similarly, the projection image IM2 corresponds to a series of display images formed on the display surface 11a of the drawing device 11 when the functional area FA of the rotating body 16a (or the 3D shape portion 116) is within a distance range around a display position P2, and the projection image IM3 corresponds to a series of display images formed on the display surface 11a of the drawing device 11 when the functional area FA of the rotating body 16a (or the 3D shape portion 116) is within a distance range around a display position P3. In the case of being viewed in one cycle based on the movement of the intermediate image TI, first, the projection image IM1 or the frame HW1 corresponding to the display position P1 is displayed. Next, after the projection image IM2 or the frame HW2 corresponding to the display position P2 is displayed, the projection image IM3 or the frame HW3 corresponding to the display position P3 is displayed. When the above one cycle is visually short, switching of the projection images IM1, IM2, and IM3 becomes significantly fast, and the driver VD, who is the observer, recognizes that the frames HW1, HW2, and HW3 are simultaneously observed as images having depths. In the present embodiment, for example, when at least two of the display positions P1 to P3 are designated as adjacent display zones or near display zones, for example, there is a time zone in which the projection images of Figs. 9B and 9C, the projection images of Figs. 9C and 9D, or all the projection images of Figs. 9B, 9C, and 9D are simultaneously overlapped and displayed in an overlapping time range within a display time.

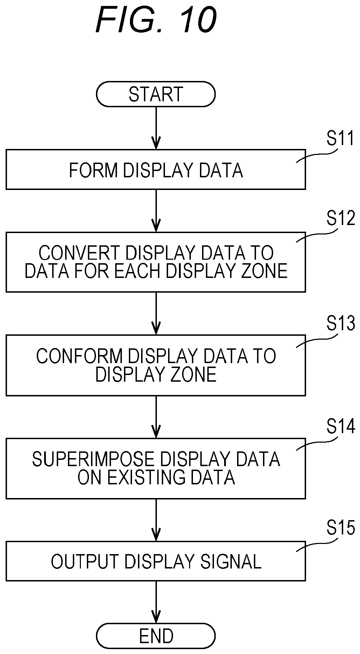

Fig. 10 is a conceptual diagram for description of an operation of the main controller 90. First, in the case of detecting the objects OB1, OB2, and OB3 using the environment monitoring unit 72, the main controller 90 generates display data corresponding to the frames HW1, HW2, and HW3 corresponding to the objects OB1, OB2, and OB3, and stores the generated display data in a storage unit (not illustrated) (step S11). After that, the main controller 90 performs data conversion such that the display data obtained in step S11 is distributed to the corresponding display zones DZ1 to DZn (step S12). Specifically, according to the positions of the objects OB1, OB2, and OB3, the corresponding frames HW1, HW2, and HW3 are allocated to any one of the display zones DZ1 to DZn (display zones DZa to DZc in the example of Fig. 8). Subsequently, the main controller 90 processes the display data corresponding to the frames HW1, HW2, and HW3 so as to conform to the allocated display zones DZ1 to DZn, and stores the display data in the storage unit (not illustrated) (step S13). This conforming includes image processing such as correcting an outline or arrangement of a frame image for each of distance zones or sub-zones LZk-2 to LZk+1. Thereafter, the main controller 90 combines the display data conformed in step S13 with existing data (step S14). The display by the display zones DZ1 to DZn is simultaneously performed in parallel in spite of the time lag, and the display is performed in a short time so that an afterimage is left. Thus, when new objects OB1, OB2, and OB3 appear, it is necessary to reconfigure display content so that an existing object and a new object coexist, which is taken into account. Lastly, the main controller 90 outputs the display data obtained in step S14 to the display controller 18 in synchronization with an operation of the rotation drive unit 64, and causes the drawing device (display element) 11 to perform a display operation according to the functional area FA of the rotating body 16a (step S15).

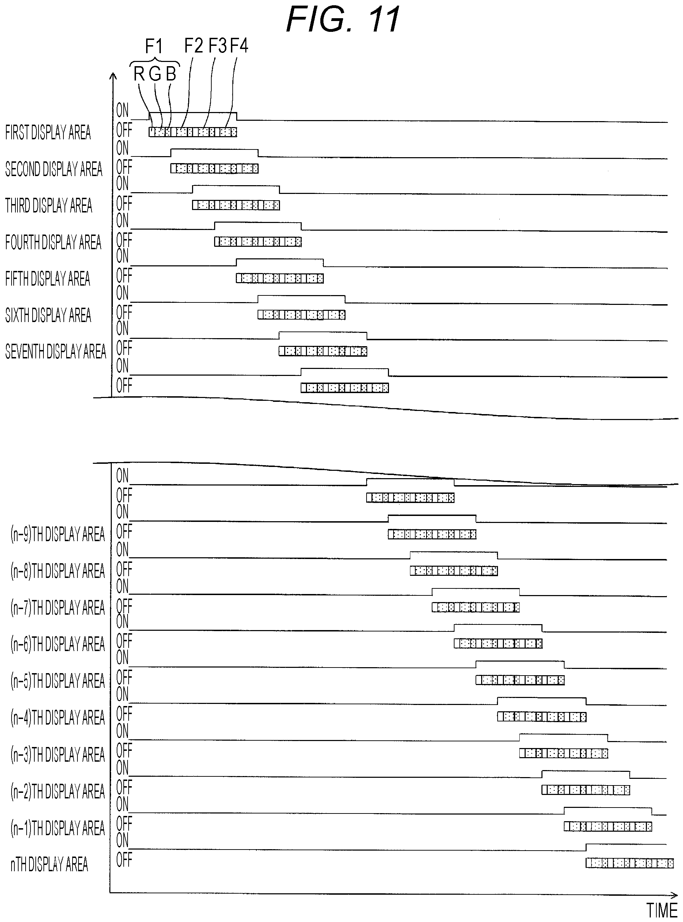

Fig. 11 is a diagram for description of an operation of the drawing device (display element) 11. In this case, a first display area to an nth display area arranged in a vertical direction correspond to the first to nth display zones DZ1 to DZn illustrated in Fig. 6 etc. In one cycle corresponding to one rotation of the rotating body 16a (or the 3D shape portion 116), corresponding to the first to nth display zones DZ1 to DZn, the display in the first to nth display areas is repeated on the display surface 11a of the drawing device (display element) 11. In each display area, signals F1 to F4 mean that the same display image is repeated in four sub-zones, and each of signals F1 to F4 includes R, G, and B signal components for color display.

According to the head-up display device 200 or the image display device 100 of the first embodiment described above, the rotation drive unit 64 rotates the intermediate screen 19 around the reference axis SX, so that a position of the functional area FA of the intermediate screen 19 in the optical axis AX direction changes continuously. By utilizing such a change of the intermediate screen position in the optical axis AX direction due to simple rotational movement, while ensuring reliability with a simple configuration, it is possible to display the virtual image (projection image IM) while changing the display position (for example, the display positions P1 to P3) at high speed including the depth direction.

### [Second Embodiment]

Hereinafter, a display device according to a second embodiment will be described. Note that the present display device is a modification of the display device of the first embodiment, and items that are not particularly described are the same as those of the first embodiment.

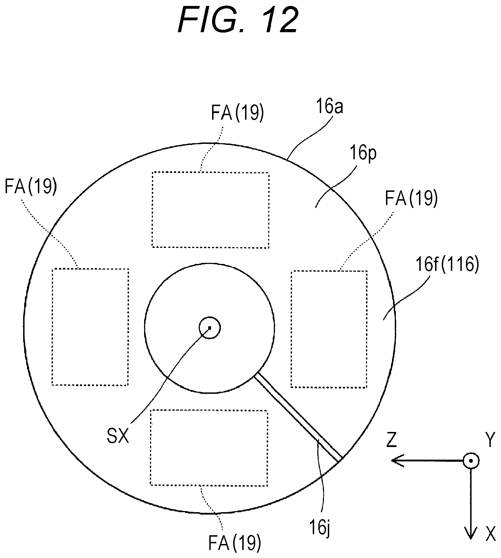

As illustrated in Fig. 12, in the case of the display device or a head-up display device of the second embodiment, functional areas FA of intermediate screens 19 are set at a plurality of discrete positions. That is, two or more separate intermediate screens 19 are provided in the spiral rotating body 16a or the 3D shape portion 116. In this case, instead of displaying virtual images in display zones DZ1 to DZn that partially overlap, virtual images are displayed in discrete distance zones. Specific description will be given with reference to Fig. 6. For example, display is performed in sub-zones LZ1, LZ5, LZ9, ..., sufficiently separated from each other, and display control is performed so that no display is performed in a sub-zone therebetween. Note that the number of divisions of the intermediate screen 19 is not limited to four, and may be set to various numbers of two or more.

### [Third Embodiment]

Hereinafter, a display device according to a third embodiment will be described. Note that the display device of the third embodiment is a modification of the display device of the first embodiment, and items that are not particularly described are the same as those of the first embodiment.

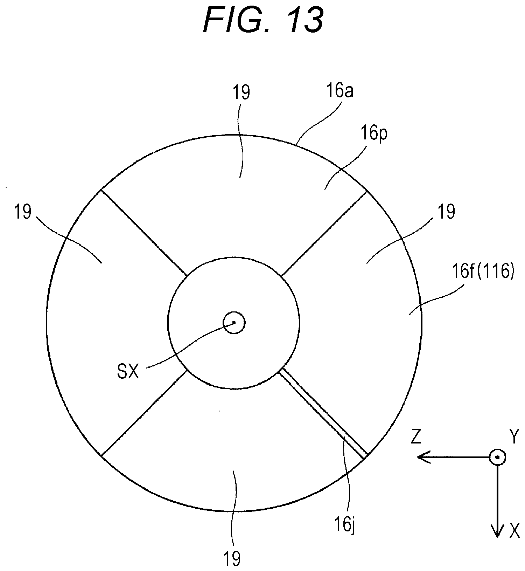

As illustrated in Fig. 13, in the case of the display device or a head-up display device of the third embodiment, intermediate screens 19 are set at a plurality of discrete positions. That is, two or more separate intermediate screens 19 are provided in the spiral rotating body 16a or the 3D shape portion 116. At least one of the intermediate screens 19 has an area where continuous display such as a spiral is possible. In this case, a virtual image is displayed in a display zone not having an overlap at least between discretely existing respective screens. Here, in the same intermediate screen 19, a partial overlap may be generated in a display time between display zones. A specific example will be given with reference to Fig. 6. For example, an example is considered in which display control is performed such that display is performed in display zones DZ1, DZ5, DZ9, ..., and no display is performed in a display zone therebetween. Note that the number of divisions of the intermediate screen 19 is not limited to four, and may be set to various numbers of two or more.

### [Fourth Embodiment]

Hereinafter, a display device according to a fourth embodiment will be described. Note that the display device of the fourth embodiment is a modification of the display device of the first embodiment, and items that are not particularly described are the same as those of the first embodiment.

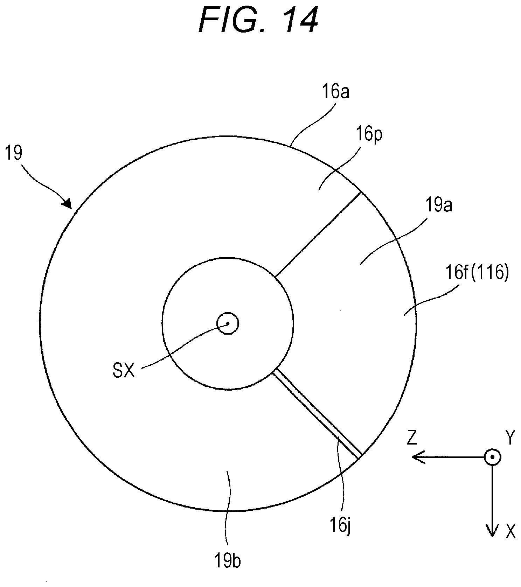

As illustrated in Fig. 14, in the case of the display device or a head-up display device of the fourth embodiment, the intermediate screen 19 includes a plurality of parts 19a and 19b. Here, for example, the part 19a corresponding to the short distance side is not a spiral surface and is a flat surface, and the part 19b excluding the short distance side is a spiral surface. In this case, in the part 19a on the short distance side, it is possible to perform display using a display zone causing a partial overlap in the display time or display using a discrete distance zone having no partial overlap in the display time. Meanwhile, in the part 19b on the non-short distance side, it is possible to perform display using a display zone that causes a partial overlap in the display time.

### [Fifth Embodiment]

Hereinafter, a display device according to a fifth embodiment will be described. Note that the display device of the fifth embodiment is a modification of the display device of the first embodiment, and items that are not particularly described are the same as those of the first embodiment.

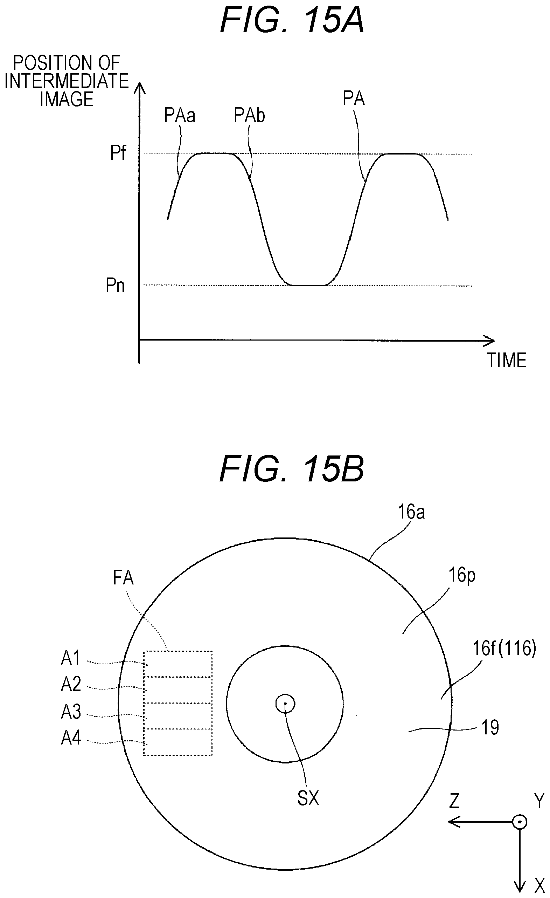

As illustrated in Fig. 15A, in the case of the display device or a head-up display device 200 of the fifth embodiment, the intermediate screen 19 is formed by combining opposite inclined surfaces, and the temporal pattern PA at the position where the intermediate screen 19 intersects the optical axis AX is similar to a sine wave. That is, in the case of the fifth embodiment, no steps are provided in the 3D shape portion 116. The functional area FA of the 3D shape portion 116 or the rotating body 16a is set to reciprocate continuously and periodically along the optical axis AX. In this case, in a front part PAa of the temporal pattern PA, the position of the functional area FA of the intermediate screen 19 gradually increases, and in the rear part PAb of the temporal pattern PA, the position of the functional area FA of the intermediate screen 19 gradually decreases. Therefore, the functional area FA or the intermediate image TI may not be orthogonal to the optical axis AX and may be inclined.

Fig. 15B is a diagram for description of display control by the display device or the head-up display device 200 of the fifth embodiment. In this case, the functional area FA of the intermediate screen 19 is divided into a plurality of partial areas A1 to A4 along the circumferential direction around the reference axis SX, and individual displays are performed. That is, the display area of the drawing device (display element) 11 is divided in the same manner as the partial areas A1 to A4, and the display of a different projection distance is performed for each divided display area of the drawing device 11. Specifically, for example, in the partial areas A1 to A4, individual displays corresponding to different sub-zones LZk-2 to LZk+1 or distance zones included in the display zones DZ1 to DZn are performed. In a rotation cycle, images of the same sub-zone or distance zone are displayed in the respective partial areas A1 to A4 with the timing shifted. When the image display synchronized with the rotation is performed at a high speed for the timing shift, an apparent inclination of the functional area FA or the intermediate image TI is reduced, and a projection image (virtual image) IM having a small inclination can be formed. Note that the number of partial areas into which the functional area FA is divided is not limited to four illustrated in the figure, and may be set to an arbitrary number of two or more. Further, a dividing direction is not limited to the circumferential direction around the reference axis SX, and may be set to a radial direction of the reference axis SX.

According to the head-up display device 200 or the image display device 100 of the fifth embodiment, by providing no step in the 3D shape portion 116, it is possible to eliminate a period in which a step passes through the display area of the display optical system 30, which is a time during which display provided for eliminating an influence on display is not performed, during rotation of the rotating body 16a, and it is possible to ensure luminance by continuous display at all angles of the rotating body 16a.

### [Sixth Embodiment]

Hereinafter, a display device according to a sixth embodiment will be described. Note that the display device of the sixth embodiment is a modification of the display device of the first embodiment, and items that are not particularly described are the same as those of the first embodiment.

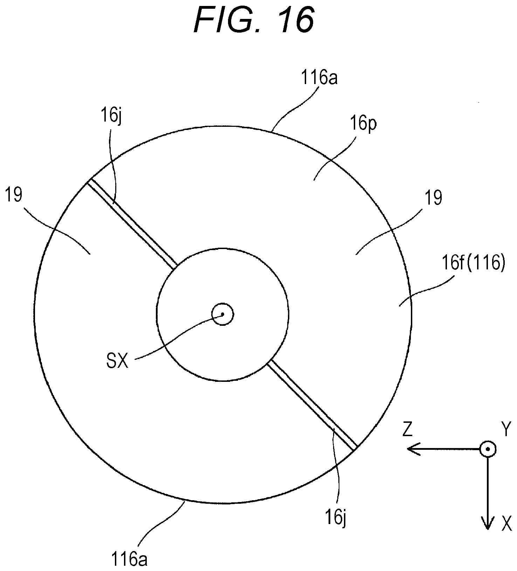

As illustrated in Fig. 16, in the case of the display device or a head-up display device of the sixth embodiment, the rotating body 16a includes a plurality of parts 116a, and includes two parts 116a in the illustrated example. A 3D shape portion 116 of a spiral surface is formed in each of the parts 116a, and the intermediate screen 19 is provided on the surface. That is, the intermediate screen 19 is formed in a range corresponding to a plurality of cycles. In other words, the 3D shape portion 116 has a plurality of spiral patterns in one rotation or one cycle, and the intermediate screen 19 is formed in a range corresponding to these spiral patterns. In this case, one rotation of the rotating body 16a enables display for two cycles in the first embodiment.

### [Seventh Embodiment]

Hereinafter, a display device according to a seventh embodiment will be described. Note that the display device of the seventh embodiment is a modification of the display device of the first embodiment, and items that are not particularly described are the same as those of the first embodiment.

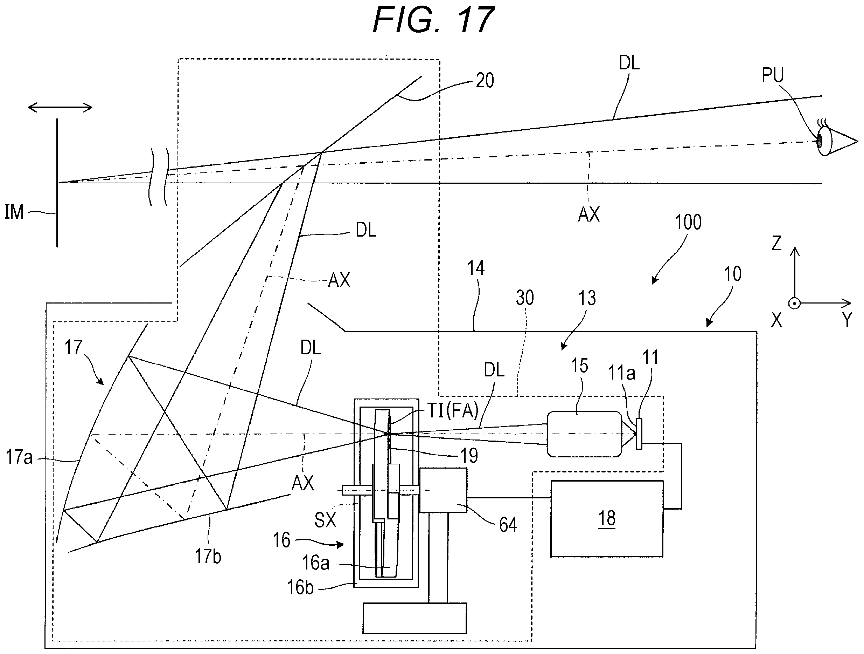

As illustrated in Fig. 17, in the present embodiment, the projection unit 10 includes a main body optical system 13 corresponding to a virtual image type enlarged imaging system that includes the drawing device 11, a display controller 18 that operates the main body optical system 13, and a housing 14 that stores the main body optical system 13 etc. Among these units, a combination of the main body optical system 13 and the display screen 20 is included in a display optical system 30.

The diffusion unit 16 is disposed at a projection position or an imaging position by the imaging optical system (first projection optical system) 15 (that is, a planned imaging position of an intermediate image or a vicinity thereof), includes a rotating body 16a and a hollow frame body 16b, and is driven by a rotation drive unit 64 to rotate around the reference axis SX at a constant speed, for example. The reference axis SX of the rotating body 16a is disposed substantially parallel to the optical axis AX of the main body optical system 13.

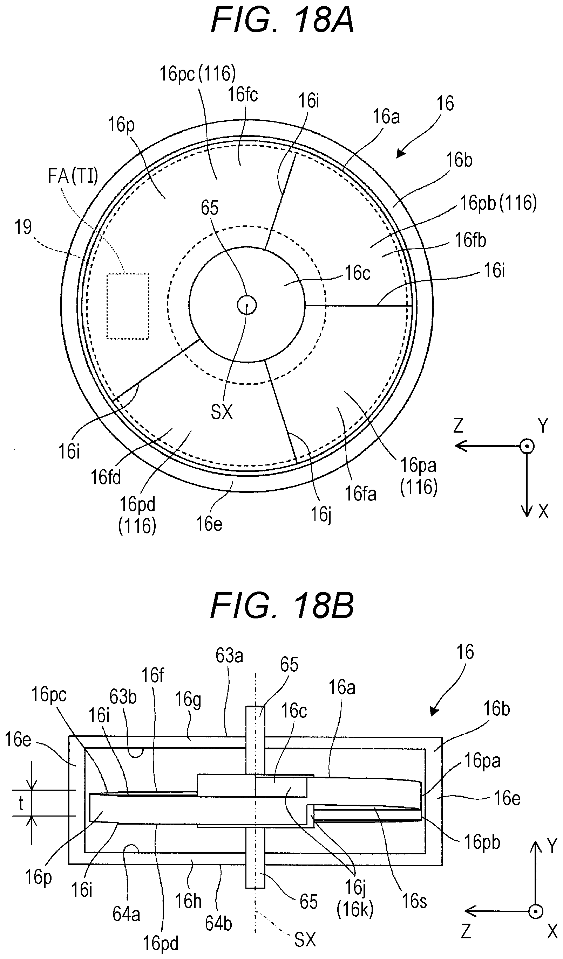

Fig. 18A is a front view for description of the diffusion unit 16, and Fig. 18B is a side sectional view for description of the diffusion unit 16. The diffusion unit 16 includes the spiral stepped rotating body 16a having an outline close to a disc as a whole, and the cylindrical hollow frame body 16b that houses the rotating body 16a.

The rotating body 16a has a central portion 16c and an outer peripheral optical portion 16p. The outer peripheral optical portion 16p of the rotating body 16a includes, for example, four partial areas 16pa to 16pd disposed around the reference axis SX. The intermediate screen 19 provided in surface areas 16fa to 16fd of these partial areas 16pa to 16pd is a diffusion plate whose light distribution angle is adjusted to a desired angle. Each of the surface areas 16fa to 16fd of the respective partial areas 16pa to 16pd is a flat area covering the functional area FA, and functions as the 3D shape portion 116 of the intermediate screen 19. These surface areas 16fa to 16fd can be regarded as divisions of one surface 16f of the rotating body 16a, and the intermediate screen 19 is formed on the entire surface 16f, and is formed on each of the surface areas 16fa to 16fd. The intermediate screen 19 can be a sheet attached to the rotating body 16a, and may be a fine uneven pattern formed on the surface of the rotating body 16a. Further, the intermediate screen 19 may be formed so as to be embedded inside the rotating body 16a. The intermediate screen 19 forms the intermediate image TI by diffusing the incident display light DL (see Fig. 17).

The rotating body 16a is an annular member which has optical transparency and in which a position in the reference axis SX or optical axis AX direction changes discretely and continuously depending on the rotational position. In the rotating body 16a, a plurality of step portions 16i are formed at a boundary between the partial areas 16pa to 16pd. The step portions 16i are provided on a side corresponding to a short distance of the 3D shape portion 116. In this way, since the distance sensitivity to movement of the intermediate screen 19 is low, it is possible to ensure a sufficiently large change in the projection distance on the short distance side. These step portions 16i can be regarded as a part of the intermediate screen 19. The step portions 16i correspond to a discontinuous part and changes the projection distance stepwise. The inter-cycle step 16j functioning as an end of the intermediate screen 19 is used to reset the projection distance. The inter-cycle step 16j is set by a movement amount of the intermediate screen determined by specifications of a short distance end and a long distance end of the projection distance in the optical axis AX direction and the reference axis SX direction, and thus gives a distance difference of, for example, 30 mm or less, and the step portions 16i give a distance difference smaller than the inter-cycle step 16j. The step portions 16i or the inter-cycle step 16j has a connection surface 16k parallel to a plane including the reference axis SX around which the diffusion unit 16 is rotated, and may have a connection surface inclined with respect to the plane including the reference axis SX. The rotating body 16a has substantially the same thickness t in the reference axis SX or optical axis AX direction in each of the partial areas 16pa to 16pd. Here, one surface 16f that combines the surface areas 16fa to 16fd of the partial areas 16pa to 16pd is formed on a smooth surface or an optical surface, and the other surface 16s opposite to the surface 16f is formed on a smooth surface or an optical surface. That is, a distance between the one surface 16f and the other surface 16s in the optical axis AX direction is the thickness t of the rotating body 16a.

The step portions 16i corresponding to boundaries between the partial areas 16pa to 16pd are disposed at angular positions of 72°, 144°, and 288° counterclockwise with reference to a position of the inter-cycle step 16j. That is, when the outer peripheral optical portion 16p is divided into five equal parts in the circumferential direction, the first partial area 16pa is formed in a first azimuth, the second partial area 16pb is formed in a second azimuth, the third partial area 16pc is formed in third and fourth azimuths, and the fourth partial area 16pd is formed in a fifth azimuth. Here, the third partial area 16pc has a relatively standard projection distance, has a relatively gradual change in the projection distance, and has a spread as if two partial areas are fused with priority given to continuity of display. The respective display areas (flat areas) 16fa to 16fd corresponding to the partial areas 16pa to 16pd are continuous in the circumferential direction and correspond to a partial spiral surface. That is, in each of the surface areas 16fa to 16fd of the partial areas 16pa to 16pd, the position of each point along the circumferential direction in the optical axis AX direction changes as a linear function according to an angular position or azimuth of each point. The respective surface areas 16fa to 16fd have different inclination angles and correspond to an inclined surface having a uniform inclination in the circumferential direction.

In the rotating body 16a, one position along a circumferential direction corresponds to the functional area FA through which the optical axis AX of the main body optical system 13 passes, and the intermediate image TI is formed by a portion of the intermediate screen 19 in the functional area FA. The functional area FA moves at a constant speed on the rotating body 16a as the rotating body 16a rotates. In other words, when the rotating body 16a is rotated while causing the display light (image light) DL to enter the functional area FA corresponding to a portion thereof, the position of the functional area FA or the intermediate image TI moves along the optical axis AX (When display of the drawing device 11 is not operating, an intermediate image as a display may not be formed. However, a position where the intermediate image will be formed is also referred to as a position of the intermediate image.). In the illustrated example, since the intermediate screen 19 is formed as the surface areas 16fa to 16fd of the four partial areas 16pa to 16pd included in the outer peripheral optical portion 16p, the functional area FA or the intermediate image TI of the intermediate screen 19 moves in the optical axis AX direction by a distance corresponding to the inter-cycle step 16j with one rotation of the rotating body 16a. Note that the imaging optical system (first projection optical system) 15 has a predetermined depth of focus equal to or larger than a movement range of the functional area FA so that defocus does not occur depending on the position of the intermediate screen 19. Alternatively, an image without blur can be obtained by providing the imaging optical system 15 as the first projection optical system with a focusing function.

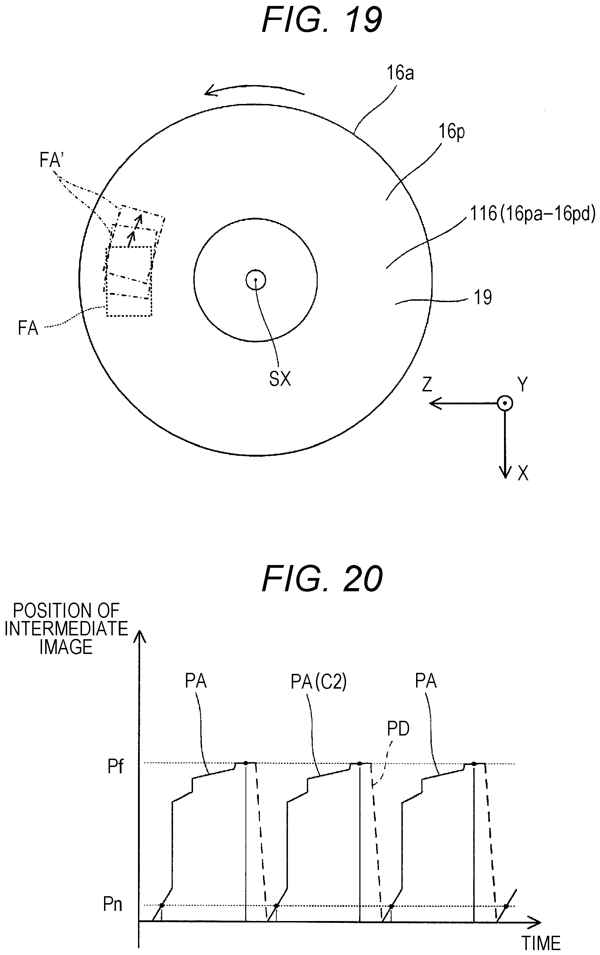

Returning to Fig. 17, by rotating the diffusion unit 16 around the reference axis SX at a constant speed using the rotation drive unit 64, a position where the intermediate screen 19 (or the 3D shape portion 116) of the rotating body 16a intersects the optical axis AX (that is, the functional area FA) moves in the optical axis AX direction. That is, as illustrated in Fig. 19, as the rotating body 16a rotates, the functional area FA on the intermediate screen 19 is successively shifted to, for example, an adjacent functional area FA' set at a position shifted at an equal angle, and moves in the optical axis AX direction. By moving the functional area FA in the optical axis AX direction, the position of the intermediate image TI can be moved in the optical axis AX direction. Even though details will be described later, for example, by moving the position of the intermediate image TI to the virtual image formation optical system 17 side, it is possible to reduce the projection distance or the virtual image distance to the projection image IM. Further, by moving the position of the intermediate image TI to the drawing device (display element) 11 side, it is possible to increase the projection distance or the virtual image distance to the projection image IM.

Fig. 20 is a diagram specifically illustrating a change in the position of the intermediate image TI due to the rotation of the diffusion unit 16. The functional area FA of the diffusion unit 16 repeatedly and periodically moves in the optical axis AX direction in a saturated stepwise temporal pattern PA. When the drawing device (display element) 11 performs continuous display, the position of the intermediate image TI repeatedly and periodically moves along the optical axis AX direction in a saturated stepwise temporal pattern PA as illustrated in the figure. That is, the position of the intermediate image TI continuously increases in accordance with the inclination of the surface areas 16fa to 16fd, gradually increases as a whole at positions corresponding to the step portions 16i while being discontinuous, and decreases so as to return to the original position at the break PD corresponding to the inter-cycle step 16j. In other words, the position of the intermediate image TI changes in a complex pattern having a timing that changes stepwise discontinuously during a period in which the intermediate image TI changes continuously with the rotation of the diffusion unit 16, and periodically changes as a whole. As a result, although not illustrated, the position of the projection image (virtual image) IM repeatedly and periodically moves along the optical axis AX direction similarly to the position of the intermediate image TI even though a scale is different, and the projection distance can be changed continuously and stepwise. Here, since the drawing device 11 does not perform continuous display, and performs intermittent display while switching the display content, the display position of the intermediate image TI becomes a discrete position on the saturated stepwise temporal pattern.

Here, in the case of displaying an image in a certain distance zone, the displayed distance changes when the position of the intermediate image TI changes within a display time as illustrated in Fig. 20. In this instance, the display distance seen by the observer (driver VD) for the display zone in which the distance changes in such a manner is a substantially average position of the distance that changes within the display time.

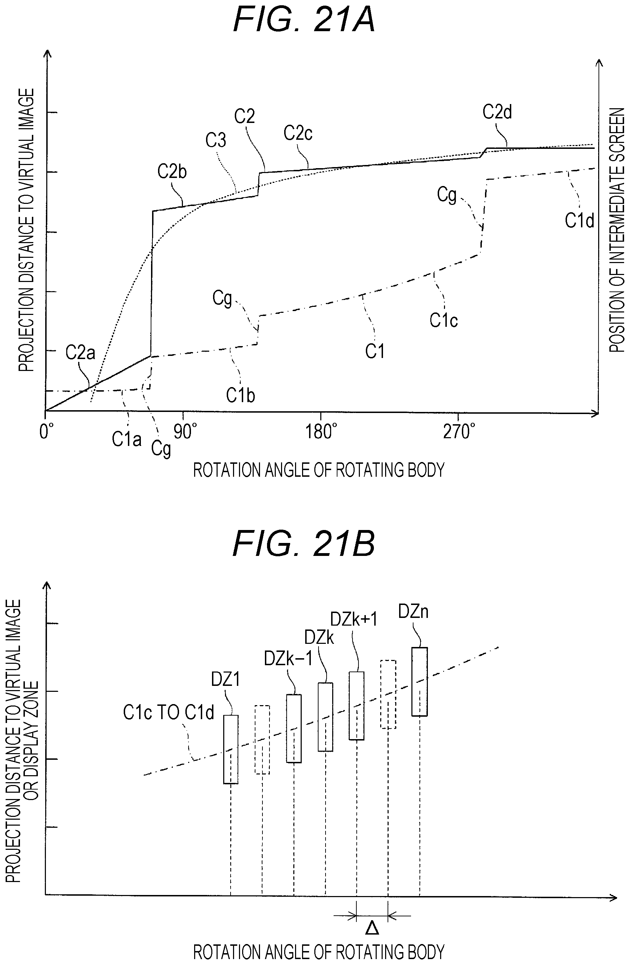

Fig. 21A is a diagram for description of a relationship between the position of the intermediate image TI and the projection distance. A characteristic C2 of the solid line corresponds to the temporal pattern PA illustrated in Fig. 20, and has flat portions C2a to C2d corresponding to the surface areas 16fa to 16fd of the partial areas 16pa to 16pd included in the rotating body 16a. A curve C3 connecting centers of these flat portions C2a to C2d has a change pattern of a first-order fractional function that saturates over time. In more detail, positions of the plurality of surface areas 16fa to 16fd and the plurality of 3D shape portions 116 in the optical axis AX direction change according to a first-order fractional function in which the projection distance changes approximately linearly with respect to the rotational position of the surface areas 16fa to 16fd and the 3D shape portion 116. In this way, between the 3D shape portions 116, the projection distance is changed while keeping the distance sensitivity to the movement of the intermediate screen 19 constant, and uniform display can be performed at the long distance and the short distance. Further, the design and processing of the 3D shape portion 116 are facilitated. In a case where the intermediate image TI is moved in the optical axis AX direction in a pattern in which the speed gradually becomes saturated while changing stepwise according to the characteristic C2 of the solid line, when the interval δ of the switching time of each distance zone is set to a constant value, the projection distance has a relatively short rate of change both at a short distance and a long distance as indicated by the characteristic C1 of the dashed line. Here, the characteristic C1 has gradually increasing portions C1a to C1d corresponding to the flat portions C2a to C2d of the temporal pattern PA, and has a gap portion Cg in which the projection distance rapidly changes between these gradually increasing portions C1a to C1d. In the vicinity of the gap portion Cg, it becomes difficult to project a virtual image, and thus it is desirable to perform display such that such a projection distance is avoided by intentional shifting etc. Note that an interval of movement of the intermediate image TI corresponds to a rotation unit angle Δ of the rotating body 16a, and the rotation unit angle Δ corresponds to the switching time of the displayed distance zone.

At the time of display using the gradually increasing portions C1a to C1d, when a display unit having a depth is set as a display zone and the display zone extends over a plurality of distance zones, overlapping occurs in the projection distance range at least in adjacent display zones (see display zones DZk-1 to DZk+1 of Fig. 21B). By performing the overlapping display with respect to the projection distance range in this manner, the same projection image (virtual image) can be displayed with a spread in the depth direction, it is possible to extend the display time of each display zone compared to a display that does not cause overlap, and luminance of the projection image (virtual image) IM is improved.

As illustrated in Fig. 21B, it is possible to set a plurality of display zones DZ1 to DZn (n is a natural number) along the respective gradually increasing portions C1a to C1d included in the characteristic C1. Adjacent display zones among the plurality of display zones DZ1 to DZn have partially overlapping projection distances. That is, projection distances of a kth display zone DZk (k is a natural number smaller than n) and a (k+1)th display zone DZk+1 partially overlap, and projection distances of a (k-1)th display zone DZk-1 and a kth display zone DZk partially overlap. The kth display zone DZk corresponds to a composite projection image in which an original display image at a projection distance of a display target to be displayed therein is displayed together with an image displayed in a display zone set before, after, or both before and after the image. In this case, the display time of the image displayed in each of the display zones DZ1 to DZn is shifted between the display zones DZ1 to DZn adjacent to each other at the pitch of the display time interval δ. Thus, the distance between both ends of the near side and the far side during the display is changed accordingly, and the average distance is changed. Since a human eye or brain captures the display image at the average distance of the display zones DZ1 to DZn, even when display is performed visually at the same time, the display distances of the respective display zones DZ1 to DZn can be displayed as different positions. In Fig. 21B, for convenience of display, each of the display zones DZ1 to DZn is illustrated to extend in the vertical direction. However, when the horizontal axis is set to the position of the intermediate image TI, each of the display zones DZ1 to DZn extends along the gradually increasing portions C1a to C1d.

The display times in the first display zone DZ1 to the nth display zone DZn are all equal. By setting the display time in each of the display zones DZ1 to DZn to the same display time, the display luminance of each of the display zones DZ1 to DZn can be matched, and it is possible to prevent the driver VD as an observer from unintentionally tending to focus on an image at a specific distance.

In the case of displaying different targets in a specific depth direction on the screen, display targets at different distances are placed at positions overlapping each other or close to each other to substantially overlap each other in a 2D plane other than the depth direction, it is conceivable that interference between these displays will occur, and it is necessary to avoid the occurrence. For example, when a display target present at a different display distance DZk' with respect to a display target in the display zone DZk is located close thereto in the 2D plane, and interference occurs in displays for the respective targets, it is conceivable to perform display to synthesize the displays in an interference area. Specifically, in a common region or an intersection region where a pair of display targets overlap, an image is formed such that the pair of display targets is displayed in a semi-transparent superimposed manner. In a difference area or an independent area where a pair of display targets does not overlap, it is sufficient to perform standard display in each part. Alternatively, it is conceivable to adopt a method of having a different display using a scheme such as color, size (including thickness in the case of a line), brightness, blinking, etc., which may be devised to be transmitted to the driver VD.

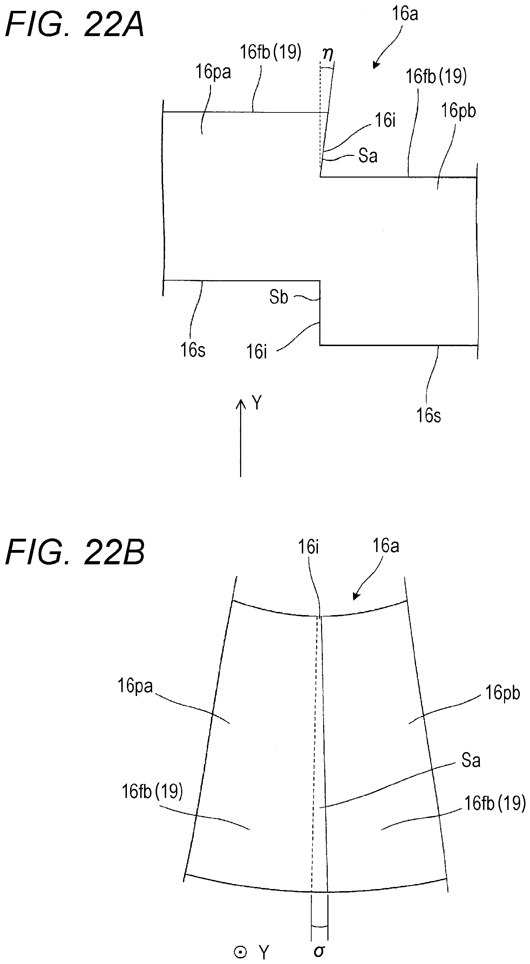

As illustrated in Fig. 22A and Fig. 22B, a surface Sa on the light source side or the incident side of the step portion 16i provided on the rotating body 16a of the diffusion unit 16 is not parallel to a Y direction or the optical axis AX and may be in an overhanging state by being inclined. In other words, in the case of viewing from the light source side, that is, from the +Y side, along the optical axis AX direction, the pair of surface areas 16fa and 16fb are in an overlapping state, and an overlap angle σ is about several degrees to ten degrees even though the overlap angle depends on the size of the diffusion unit 16 and the spread of the functional area FA. As a result, the overlap angle σ of the intermediate screen 19 provided in the both surface areas 16fa and 16fb is about several degrees to ten degrees. In this case, an operation start of the intermediate screen 19 on the incident side or the upper side of Fig. 22A is earlier than an operation start of the intermediate screen 19 on the emission side or the lower side of Fig. 22A. As illustrated in Fig. 22A, instead of making the overlap angle σ of the surface areas 16fa and 16fb or the intermediate screen 19 constant, an inclination angle η of the surface Sa of the step portion 16i can be made substantially constant. In this case, an overlap width or amount of the intermediate screen 19 viewed from the +Y side can be made uniform. In the above description, the pair of surface areas 16fa and 16fb overlap. However, other pair of surface areas 16fb and 16fc or pair of surface areas 16fc and 16fd similarly overlap.

By overlapping the surface areas 16fa, 16fb, etc. as described above, the intermediate screen 19 is disposed so as to be superimposed on the step portion 16i when viewed from the optical axis AX direction, and stray light generated by image light incident on the step portion 16i can be suppressed. In other words, it is possible to inhibit light entering and passing through the step portion 16i (light unrelated to display passing through a gap between the intermediate screen 19 in front of the step and the intermediate screen 19 behind the step with respect to a rotation direction) from forming a virtual image in front of the driver VD as stray light so that a ghost image is observed.

In the above description, the step portion 16i overhands. However, the inter-cycle step 16j is in an overhanging state as the step portion 16i.

With regard to a surface Sb on the emission side on the side opposite to the light source where the intermediate screen 19 is not provided, it is desirable that the surface areas 16fa and 16fb are disposed so as to overlap the surface Sa on the light source side or incident side which appears to overlap.

In addition, in Fig. 22A, the intermediate screen 19 or the 3D shape portion 116 includes a slab-shaped plate material, and a plate material is connected between adjacent areas in the step portion 16i. However, the intermediate screen 19 may include a thin plate or a sheet. In this case, it is possible to consider a state in which the members included in the intermediate screen 19 are not connected at the step portion 16i. In such a case, the surface Sa for connection illustrated in Fig. 22A may not exist and may be hollow.

Further, for example, when the step amount becomes large, there may be a case where stray light is generated unless the overlap amount or the overlap amount width is set to be large. In this instance, when the overlap amount is set to be excessively large, there may be a problem that an unused area of a surface of the intermediate screen 19 on the lower side of Fig. 22A increases, and luminance decreases. In such a case, it is possible to remove stray light using a method of adjusting an angular position of area switching of the step portion 16i in consideration of the overlap amount and ensuring the luminance or a method of conversely extremely reducing or eliminating the overlap amount to paint a part corresponding to the surface Sa of Fig. 22A black or provide an opaque member that becomes a lid in the case of a cavity. These methods are means that can be used regardless of whether the step amount is large or small.

In the present embodiment, the projection distances of the projection images IM1, IM2, and IM3 (see Fig. 8 of the first embodiment) are formed in display zones DZa to DZc corresponding to some of the gradually increasing portions C1a to C1d illustrated in Fig. 21B, and have depth widths corresponding to the respective display zones DZa to DZc. Centers of the respective projection distances, that is, the projection distances of the projection images IM1, IM2, and IM3 are discrete, and may be difficult to be exactly matched with actual distances to the objects OB1, OB2, and OB3. However, when the difference between the projection distances of the projection images IM1, IM2, and IM3 and the actual distances to the objects OB1, OB2, and OB3 is not large, parallax hardly occurs even when a viewpoint of the driver VD moves, and it is possible to substantially maintain an arrangement relationship between the objects OB1, OB2, and OB3 and the frames HW1, HW2, and HW3.

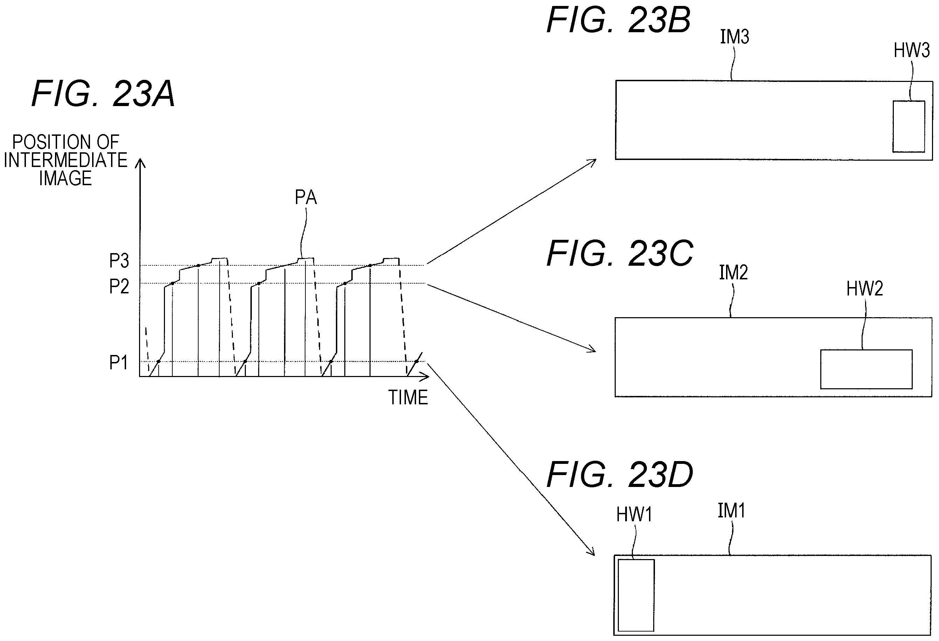

Fig. 23A corresponds to Fig. 20, Fig. 23B corresponds to the projection image IM3 or the frame HW3 of Fig. 8, Fig. 23C corresponds to the projection image IM2 or the frame HW2 of Fig. 8, and Fig. 23D corresponds to the projection image IM1 or the frame HW1 of Fig. 8. As is clear from Figs. 23A to 23D, when the functional area FA or the intermediate image TI of the rotating body 16a (or the 3D shape portion 116) is within a predetermined distance range around a display position P1, specifically, at the time of a display timing of a predetermined display zone determined based on the characteristic C1 illustrated in Fig. 21B according to the predetermined distance range, the projection image IM1 corresponds to a series of display images formed on the display surface 11a of the drawing device (display element) 11. Similarly, the projection image IM2 corresponds to a series of display images formed on the display surface 11a of the drawing device 11 when the functional area FA of the rotating body 16a (or the 3D shape portion 116) is within a distance range around a display position P2, and the projection image IM3 corresponds to a series of display images formed on the display surface 11a of the drawing device 11 when the functional area FA of the rotating body 16a (or the 3D shape portion 116) is within a distance range around a display position P3. In the case of being viewed in one cycle based on the movement of the intermediate image TI, first, the projection image IM1 or the frame HW1 corresponding to the display position P1 is displayed. Next, after the projection image IM2 or the frame HW2 corresponding to the display position P2 is displayed, the projection image IM3 or the frame HW3 corresponding to the display position P3 is displayed. When the above one cycle is visually short, switching of the projection images IM1, IM2, and IM3 becomes significantly fast, and the driver VD, who is the observer, recognizes that the frames HW1, HW2, and HW3 are simultaneously observed as images having depths. In the present embodiment, for example, when at least two of the display positions P1 to P3 are designated as adjacent display zones or near display zones, for example, there is a time zone in which the projection images of Figs. 23B and 23C, the projection images of Figs. 23C and 23D, or all the projection images of Figs. 23B, 23C, and 23D are simultaneously overlapped and displayed in an overlapping time range within a display time.

Hereinafter, an operation of the main controller 90 will be described with reference to Fig. 10 of the first embodiment. First, in the case of detecting the objects OB1, OB2, and OB3 using the environment monitoring unit 72, the main controller 90 generates display data corresponding to the frames HW1, HW2, and HW3 corresponding to the objects OB1, OB2, and OB3, and stores the generated display data in a storage unit (not illustrated) (step S11). After that, the main controller 90 performs data conversion such that the display data obtained in step S11 is distributed to the corresponding display zones DZ1 to DZn in any of the gradually increasing portions C1a to C1d (step S12). Specifically, according to the positions of the objects OB1, OB2, and OB3, the corresponding frames HW1, HW2, and HW3 are allocated to specific display zones DZ1 to DZn (display zones DZa to DZc in the example of Fig. 8) in the corresponding gradually increasing portions C1a to C1d. Subsequently, the main controller 90 processes the display data corresponding to the frames HW1, HW2, and HW3 so as to conform to the allocated display zones DZ1 to DZn, and stores the display data in the storage unit (not illustrated) (step S13). This conforming includes image processing such as correcting an outline or arrangement of a frame image for each distance zone included in the display zone. Thereafter, the main controller 90 combines the display data conformed in step S13 with existing data (step S14). The display by the display zones DZ1 to DZn is simultaneously performed in parallel in spite of the time lag, and the display is performed in a short time so that an afterimage is left. Thus, when new objects OB1, OB2, and OB3 appear, it is necessary to reconfigure display content so that an existing object and a new object coexist, which is taken into account. Lastly, the main controller 90 outputs the display data obtained in step S14 to the display controller 18 in synchronization with an operation of the rotation drive unit 64, and causes the drawing device (display element) 11 to perform a display operation according to the functional area FA of the rotating body 16a (step S15).

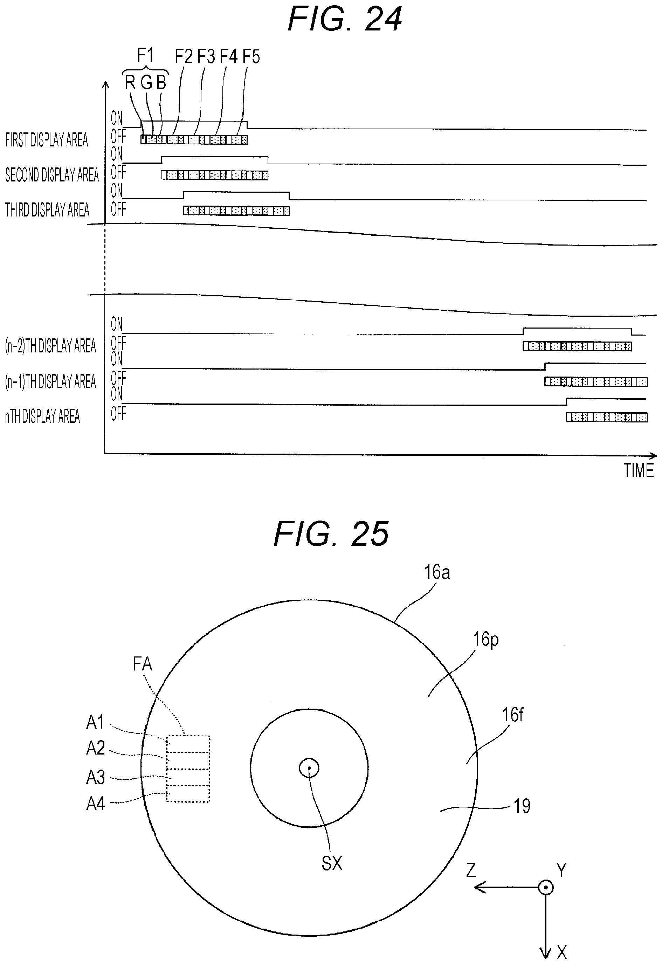

Fig. 24 is a diagram for description of an operation of the drawing device (display element) 11. In this case, a first display area to an nth display area arranged in a vertical direction correspond to the first to nth display zones DZ1 to DZn illustrated in Fig. 21B etc. In units of the respective partial areas 16pa to 16pd (or the 3D shape portion 116) of the rotating body 16a, corresponding to the first to nth display zones DZ1 to DZn, the display in the first to nth display areas is repeated on the display surface 11a of the drawing device (display element) 11. In each display area, signals F1 to F5 mean that the same display image is repeated in five sub-zones, and each of signals F1 to F5 includes R, G, and B signal components for color display.

In the above description, the outer peripheral optical portion 16p of the rotating body 16a is divided into five equal parts in the circumferential direction to allocate the four partial areas 16pa to 16pd. However, a desired number of partial areas can be allocated by dividing the outer peripheral optical portion 16p into five or more equal parts or three or fewer equal parts in the circumferential direction. Further, instead of dividing the outer peripheral optical portion 16p equally in the circumferential direction, a desired number of partial areas can be allocated by dividing the outer peripheral optical portion 16p at an appropriate ratio in the circumferential direction.

According to the head-up display device 200 or the image display device 100 of the seventh embodiment described above, the intermediate screen 19 has the 3D shape portion 116 in which the position of the functional area FA in the optical axis AX direction continuously changes with rotation and has the step portions 16i that change the projection distance stepwise with regard to at least a part. Thus, by performing display while gradually changing the projection distance, it is possible to easily perform continuous display in which the display has depth, and to prevent the interval of the change of the projection distance from being excessively fine. Note that, by performing the continuous display as described above, it is possible to improve the luminance when compared to a case where the intermediate screen 19 is set to be a complete step shape and the discontinuous display is performed.

In particular, in a case where the distance difference between the short distance side and the long distance side of the virtual image distance to be set is large, when a structure having no step is adopted, for example, in a structure provided with a certain slope, the projection distance hardly changes even when the intermediate screen 19 moves on the short distance side, whereas the projection distance greatly fluctuates with respect to movement of the intermediate screen 19 on the long distance side. That is, the difference in sensitivity of the change in the projection distance with respect to the movement of the intermediate screen 19 is significantly different between the short distance side and the long distance side. Thus, for example, when the divided distance zones are set such that the position of the intermediate screen 19 changes at a constant pitch in accordance with the rotation angle of the intermediate screen 19, the projection distance hardly changes in each distance zone on the short distance side, and the projection distance changes at once conversely on the long distance side. Thus, there is a problem that setting of the distance division is biased. Alternatively, similarly in a case where the distance difference between the short distance side and the long distance side is large, when there is an attempt to set division of each distance zone equally at a fixed distance, the movement amount of the intermediate screen 19 increases on the short distance side, whereas there is almost no movement amount of the intermediate screen 19 on the long distance side. Further, there is a difference in the rate of change of the movement of the intermediate screen 19 from the near side to the far side. Particularly, on the short distance side, an unnaturalness of the image due to the difference in the distance between the left and right or the upper and lower sides of the display screen easily occurs, which is a problem. When a step is provided for at least a part of the projection distance, it is possible to adopt a structure in which the projection distance is changed at each distance while reducing the difference between the short distance side and the long distance side, which can be considered to be a desirable configuration.

### [Eighth Embodiment]

Hereinafter, a display device according to an eighth embodiment will be described. Note that the display device of the eighth embodiment is a modification of the display device of the first or seventh embodiment, and items that are not particularly described are the same as those of the first embodiment etc.

Fig. 25 is a diagram for description of display control by the display device, the head-up display device, or the image display device of the eighth embodiment. In this case, the functional area FA of the intermediate screen 19 is divided into a plurality of partial areas A1 to A4 along the circumferential direction around the reference axis SX, and individual displays are performed. That is, the display area of the drawing device (display element) 11 is divided in the same manner as the partial areas A1 to A4, and the display of a different projection distance is performed for each divided display area of the drawing device 11. Specifically, for example, in the partial areas A1 to A4, individual displays corresponding to different sub-zones or distance zones included in the display zones DZ1 to DZn are performed. In a rotation cycle, images of the same sub-zone or distance zone are displayed in the respective partial areas A1 to A4 with the timing shifted. When the image display synchronized with the rotation is performed at a high speed for the timing shift, an apparent inclination of the functional area FA or the intermediate image TI is reduced, and a projection image (virtual image) IM having a small inclination can be formed. In addition, it is possible to perform display to interpose the step portions 16i, and it is easy to reduce a missing part of the projection distance. In the case of performing the display to interpose the step portions 16i, it is more desirable to remove stray light by an overhang shape at the step portions 16i of the rotating body 16a illustrated in Fig. 22A etc., that is, the overlap of the intermediate screen 19. Note that the number of partial areas into which the functional area FA is divided is not limited to four illustrated in the figure, and may be set to an arbitrary number of two or more. Further, a dividing direction is not limited to the circumferential direction around the reference axis SX, and may be set to a radial direction of the reference axis SX.

### [Ninth Embodiment]

Hereinafter, a display device according to a ninth embodiment will be described. Note that the display device of the ninth embodiment is a modification of the display device of the first or seventh embodiment, and items that are not particularly described are the same as those of the first embodiment etc.

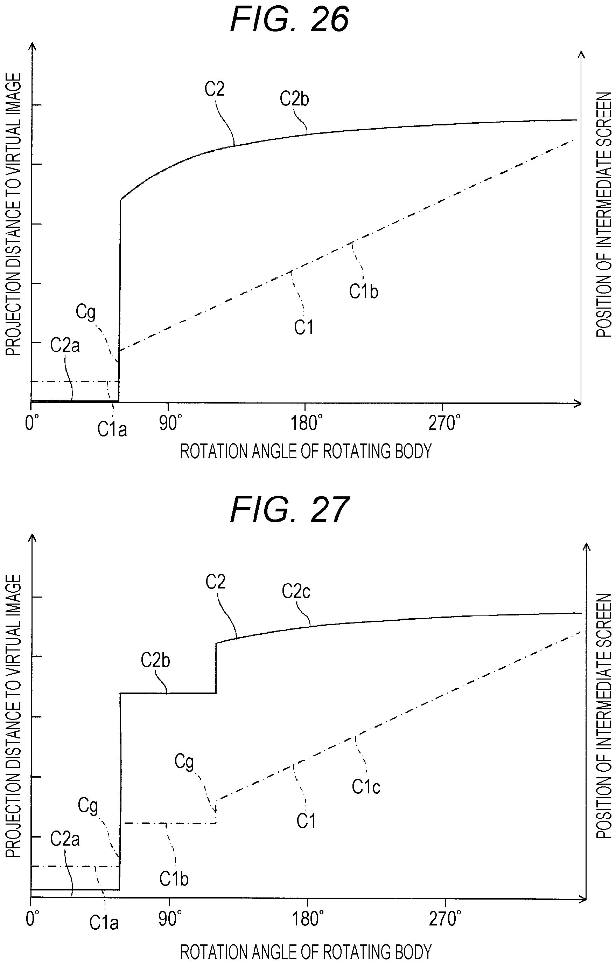

Fig. 26 corresponds to Fig. 21A, and illustrates a relationship between the position of the intermediate image TI and the projection distance of the display device or the head-up display device of the ninth embodiment. In this case, the characteristic C2 of the solid line has flat portions C2a and C2b corresponding to two partial areas included in the rotating body 16a, and a gap portion Cg is provided between the flat portions C2a and C2b. One flat portion C2a has a planar shape in which the position of the intermediate screen 19 in the optical axis AX direction does not change with respect to the rotation of the rotating body 16a or the 3D shape portion 116. In this way, the projection distance can be kept constant while changing the rotational position of the intermediate screen 19. In the other flat portion C2b, the position of the intermediate screen 19 in the optical axis AX direction changes according to a first-order fractional function with respect to the rotation of the rotating body 16a or the 3D shape portion 116. In other words, in the projection using the flat portion C2a, the position of the intermediate image TI is kept constant, and the projection image IM is fixed in the depth direction (see the gradually increasing portion C1a in the characteristic C1 indicated by a dashed line). In the projection using the flat portion C2b, the projection distance changes substantially linearly or linearly with respect to the rotational position of the rotating body 16a or the 3D shape portion 116 (see the gradually increasing portion C1b in the characteristic C1 indicated by a dashed line). The flat portion C2a on the short distance side facilitates formation of a stable projection image IM by avoiding the distance sensitivity becoming dull at short distances to cause the projection distance to be subdivided. Meanwhile, the flat portion C2b on the long distance side allows the projection distance to be linearly changed, so that allocation of the distance of the projection image IM is simple, accurate, and well-balanced.

### [Tenth Embodiment]

Hereinafter, a display device according to a tenth embodiment will be described. Note that the display device of the tenth embodiment is a modification of the display device of the first or seventh embodiment, and items that are not particularly described are the same as those of the first embodiment etc.

Fig. 27 corresponds to Fig. 21A, and illustrates a relationship between the position of the intermediate image TI and the projection distance of the display device or the head-up display device of the tenth embodiment. In this case, the characteristic C2 of the solid line has flat portions C2a, C2b, and C2c corresponding to three partial areas included in the rotating body 16a, and a gap portion Cg is provided between the flat portions C2a, C2b, and C2c. The first flat portion C2a is responsible for projection to a shortest distance area, and has a planar shape in which the position of the intermediate screen 19 in the optical axis AX direction does not change with respect to the rotation of the rotating body 16a or the 3D shape portion 116. The second flat portion C2b is responsible for projection to a second shortest distance area, and has a planar shape in which the position of the intermediate screen 19 in the optical axis AX direction does not change with respect to the rotation of the rotating body 16a or the 3D shape portion 116. In the third flat portion C2c, the position of the intermediate screen 19 in the optical axis AX direction changes according to a first-order fractional function with respect to the rotation of the rotating body 16a or the 3D shape portion 116. As a result, in the projection using the flat portions C2a and C2b, the position of the intermediate image TI is kept constant, and the projection image IM is fixed in the depth direction (see the gradually increasing portions C1a and C1b in the characteristic C1 indicated by a dashed line). In the projection using the flat portion C2c, the projection distance changes substantially linearly or linearly with respect to the rotational position of the rotating body 16a or the 3D shape portion 116 (see the gradually increasing portion C1c in the characteristic C1 indicated by a dashed line).

### [Eleventh Embodiment]

Hereinafter, a display device according to an eleventh embodiment will be described. Note that the display device of the eleventh embodiment is a modification of the display device of the first or seventh embodiment, and items that are not particularly described are the same as those of the first embodiment etc.

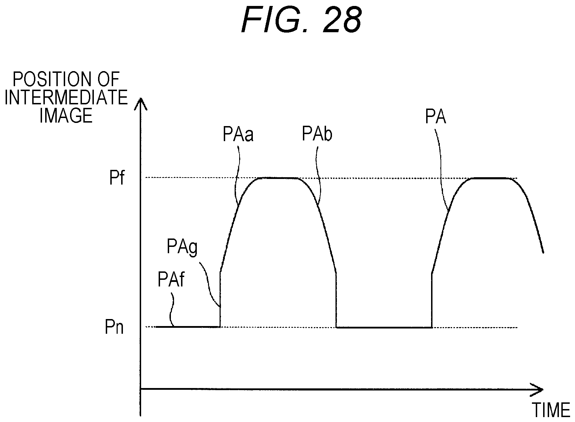

As illustrated in Fig. 28, in the case of the display device or a head-up display device of the eleventh embodiment, the intermediate screen 19 is formed by combining opposite inclined surfaces, and the temporal pattern PA at the position where the intermediate screen 19 intersects the optical axis AX is similar to a sine wave. However, in addition to the front part (increased saturation part) PAa and the rear part (saturation reduced part) PAb, a step PAg and a flat portion PAf are provided at the lower end side. In this case, the position of the intermediate image TI or the functional area FA in the 3D shape portion 116 or the rotating body 16a continuously moves along the optical axis AX direction in an area corresponding to the front part (increased saturation part) PAa and the rear part (saturation reduced part) PAb, is kept constant without moving along the optical axis AX direction in an area corresponding to the flat portion PAf, and changes so that a leap occurs at the step PAg, thereby periodically reciprocating as a whole.

### [Twelfth Embodiment]

Hereinafter, a display device according to a twelfth embodiment will be described. Note that the display device of the twelfth embodiment is a modification of the display device of the first embodiment, and items that are not particularly described are the same as those of the first embodiment.

The diffusion unit 16 of the present embodiment is disposed at a projection position or an imaging position by the imaging optical system (first projection optical system) 15 (that is, a planned imaging position of an intermediate image or a vicinity thereof), includes a rotating body 16a and a hollow frame body 16b, and is driven by a rotation drive unit 64 to rotate around the reference axis SX at a constant speed, for example. In the present embodiment, the reference axis SX of the rotating body 16a is disposed substantially parallel to the optical axis AX of the main body optical system 13.

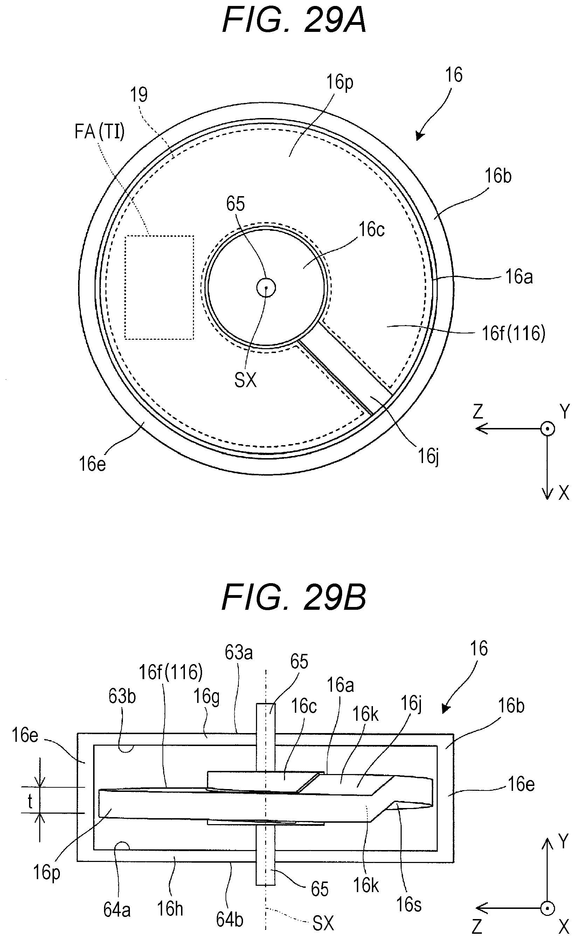

Fig. 29A is a front view for description of the diffusion unit 16, and Fig. 29B is a side sectional view for description of the diffusion unit 16. The diffusion unit 16 includes the spiral rotating body 16a having an outline close to a disc as a whole, and the cylindrical hollow frame body 16b that houses the rotating body 16a.

The rotating body 16a has a central portion 16c and an outer peripheral optical portion 16p. One surface 16f formed on the outer peripheral optical portion 16p of the rotating body 16a is formed as a smooth surface or an optical surface, and the intermediate screen 19 is formed over the entire surface on the surface 16f. The surface 16f of the rotating body 16a functions as a three-dimensional (3D) shape portion 116. The intermediate screen 19 is a diffusion plate whose light distribution angle is adjusted to a desired angle. The intermediate screen 19 can be a sheet attached to the rotating body 16a, and may be a fine uneven pattern formed on the surface of the rotating body 16a. Further, the intermediate screen 19 may be formed so as to be embedded inside the rotating body 16a. The intermediate screen 19 forms the intermediate image TI by diffusing the incident display light DL (see Fig. 2 of the first embodiment). The other surface 16s formed on the outer peripheral optical portion 16p of the rotating body 16a is formed as a smooth surface or an optical surface. The rotating body 16a is an annular member having optical transparency and a position in the reference axis SX or optical axis AX direction continuously changing depending on the rotational position, and the pair of surfaces 16f and 16s are annular surfaces continuously and gradually displaced in the reference axis SX direction while using the reference axis SX as a central axis. As a result, the intermediate screen 19 formed on one surface 16f is formed along a continuously undulating annular surface. The rotating body 16a is provided with the inter-cycle step 16j corresponding to a discontinuous portion at one location along a circumference thereof. The inter-cycle step 16j is a step provided at a position corresponding to an end of the 3D shape portion 116, and gives a distance difference or pitch of 30 mm or less in the optical axis AX direction or the reference axis SX direction. The inter-cycle step 16j has a connection surface 16k inclined with respect to a plane including the reference axis SX around which the diffusion unit 16 is rotated. As described above, the rotating body 16a has substantially the same thickness t in the reference axis SX or optical axis AX direction.

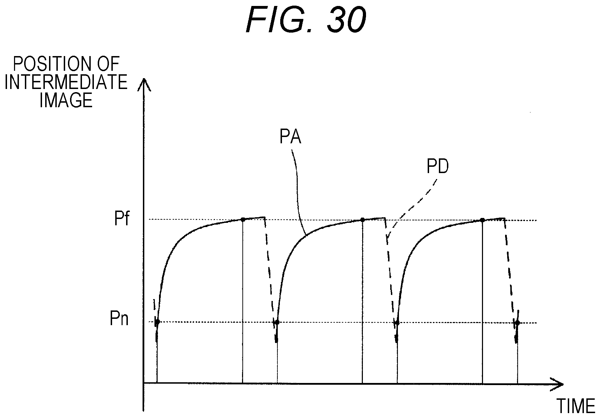

Fig. 30 is a diagram specifically illustrating a change in the position of the intermediate image TI due to the rotation of the diffusion unit 16. The functional area FA of the diffusion unit 16 repeatedly and periodically moves along the optical axis AX direction in a one-sided arc-shaped temporal pattern PA. When the drawing device (display element) 11 performs continuous display, the position of the intermediate image TI repeatedly and periodically moves in a one-sided arc-shaped temporal pattern PA along the optical axis AX direction as illustrated in the figure. That is, the position of the intermediate image TI changes continuously and periodically with the rotation of the diffusion unit 16, while being discontinuous at a position corresponding to the inter-cycle step 16j. As a result, although not illustrated, the position of the projection image (virtual image) IM repeatedly and periodically moves along the optical axis AX direction similarly to the position of the intermediate image TI even though a scale is different, and the projection distance can be continuously changed. Here, since the drawing device 11 does not perform continuous display, and performs intermittent display while switching the display content, the display position of the intermediate image TI becomes a discrete position on the one-sided arc-shaped temporal pattern. Here, in the example illustrated in Fig. 30, a change pattern of a first-order fractional function is adopted, the position of the intermediate image TI is changed so that the inclination gradually decreases with time, and the position of the functional area FA in the optical axis AX direction with respect to the rotational position of the intermediate screen 19 (or the 3D shape portion 116) of the rotating body 16a changes the projection distance equally at a predetermined interval as described later in detail.

Here, in the case of displaying an image in a certain distance zone, the displayed distance changes when the position of the intermediate image TI changes within a display time as illustrated in Fig. 30. In this instance, the display distance seen by the observer (driver VD) for the display zone in which the distance changes in such a manner is a substantially average position of the distance that changes within the display time. In consideration of this fact, in the temporal pattern PA, the nearest display position Pn and the farthest display position Pf are set at positions away from both ends of the temporal pattern PA while ensuring a margin. In addition, a break PD of the temporal pattern PA corresponds to the inter-cycle step 16j provided on the rotating body 16a of the diffusion unit 16.

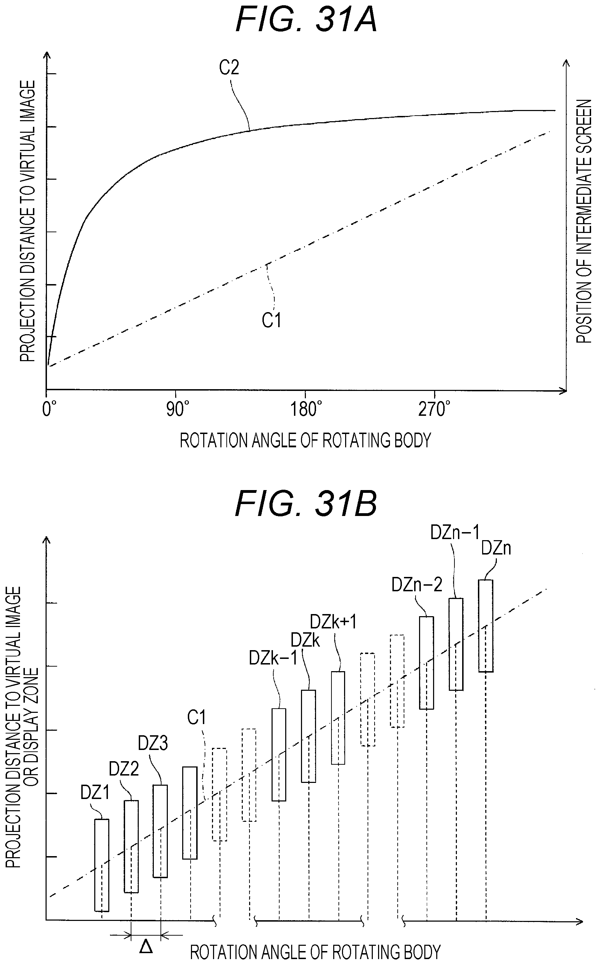

Fig. 31A is a diagram for description of a relationship between the position of the intermediate image TI and the projection distance. In a case where the intermediate image TI is moved in the optical axis AX direction in a pattern in which the speed becomes saturated according to the characteristic C2 of the solid line, when the interval δ of the switching time of each distance zone is set to a constant value, an interval of the projection distance can be the same both at a short distance and a long distance as indicated by the characteristic C1 of the dashed line. Note that an interval width of movement of the intermediate image TI corresponds to a rotation angle unit of the rotating body 16a, and the rotation unit angle Δ corresponds to the switching time of the displayed distance zone (see Fig. 31B).

In a case where the time to move between both ends of the position of the intermediate image TI illustrated in Fig. 30 is considered as one cycle, when the unit of display having a depth is set as a display zone, and the time of one cycle is shorter than the product of the display time of each display zone and the number of display zones n, the display zone spans a plurality of distance zones, and projection distance ranges overlap at least in adjacent display zones (see display zones DZ1 to DZn of Fig. 31B). By performing the overlapping display with respect to the projection distance range in this manner, the same projection image (virtual image) can be displayed with a spread in the depth direction, it is possible to extend the display time of each display zone compared to a display that does not cause overlap, and luminance of the projection image (virtual image) IM is improved.

As illustrated in Fig. 31B, n display zones can be set along the characteristic C1. Here, for convenience of description, the display zone at the shortest distance is referred to as a first display zone DZ1, and the display zone at the longest distance is referred to as an nth display zone DZn (n is a natural number). In the plurality of display zones DZ1 to DZn, the distance width for displaying from a short distance to a long distance is uniform. Adjacent display zones among the plurality of display zones DZ1 to DZn have partially overlapping projection distances. That is, projection distances of a kth display zone DZk (k is a natural number smaller than n) and a (k+1)th display zone DZk+1 partially overlap. For example, projection distances of a second display zone DZ2 and a third display zone DZ3 partially overlap. The kth display zone DZk corresponds to a composite projection image in which an original display image at a projection distance of a display target to be displayed therein is displayed together with an image displayed in a display zone set before, after, or both before and after the image. In the illustrated example, display is performed in a state in which respective images corresponding to all distance zones during display of the kth display zone DZk or distance zones of five sections within a certain period of time overlap each other. In this case, the display time of the image displayed in each of the display zones DZ1 to DZn is shifted between the display zones DZ1 to DZn adjacent to each other at the pitch of the display time interval δ. Thus, the distance between both ends of the near side and the far side during the display is changed accordingly, and the average distance is changed. Since a human eye or brain captures the display image at the average distance of the display zones DZ1 to DZn, even when display is performed visually at the same time, the display distances of the respective display zones DZ1 to DZn can be displayed as different positions. In Fig. 31B, for convenience of display, each of the display zones DZ1 to DZn is illustrated to extend in the vertical direction. However, when the horizontal axis is set to the position of the intermediate image TI, each of the display zones DZ1 to DZn extends along the characteristic C1.

The display times in the first display zone DZ1 to the nth display zone DZn are all equal. By setting the display time in each of the display zones DZ 1 to DZn to the same display time, the display luminance of each of the display zones DZ1 to DZn can be matched, and it is possible to prevent the driver VD as an observer from unintentionally tending to focus on an image at a specific distance.

In the case of displaying different targets in a specific depth direction on the screen, display targets at different distances are placed at positions overlapping each other or close to each other to substantially overlap each other in a 2D plane other than the depth direction, it is conceivable that interference between these displays will occur, and it is necessary to avoid the occurrence. For example, when a display target present at a different display distance DZk' with respect to a display target in the display zone DZk is located close thereto in the 2D plane, and interference occurs in displays for the respective targets, it is conceivable to perform display to synthesize the displays in an interference area. Specifically, in a common region or an intersection region where a pair of display targets overlap, an image is formed such that the pair of display targets is displayed in a semi-transparent superimposed manner. In a difference area or an independent area where a pair of display targets does not overlap, it is sufficient to perform standard display in each part. Alternatively, it is conceivable to adopt a method of having a different display using a scheme such as color, size (including thickness in the case of a line), brightness, blinking, etc., which may be devised to be transmitted to the driver VD.

In the present embodiment, the projection distances of the projection images IM1, IM2, and IM3 (see Fig. 8 of the first embodiment) are formed in display zones DZa to DZc corresponding to some of the display zones DZ1 to DZn illustrated in Fig. 31B, and have depth widths corresponding to the respective display zones DZa to DZc. Centers of the respective projection distances, that is, the projection distances of the projection images IM1, IM2, and IM3 are discrete, and may be difficult to be exactly matched with actual distances to the objects OB1, OB2, and OB3. However, when the difference between the projection distances of the projection images IM1, IM2, and IM3 and the actual distances to the objects OB1, OB2, and OB3 is not large, parallax hardly occurs even when a viewpoint of the driver VD moves, and it is possible to substantially maintain an arrangement relationship between the objects OB1, OB2, and OB3 and the frames HW1, HW2, and HW3.

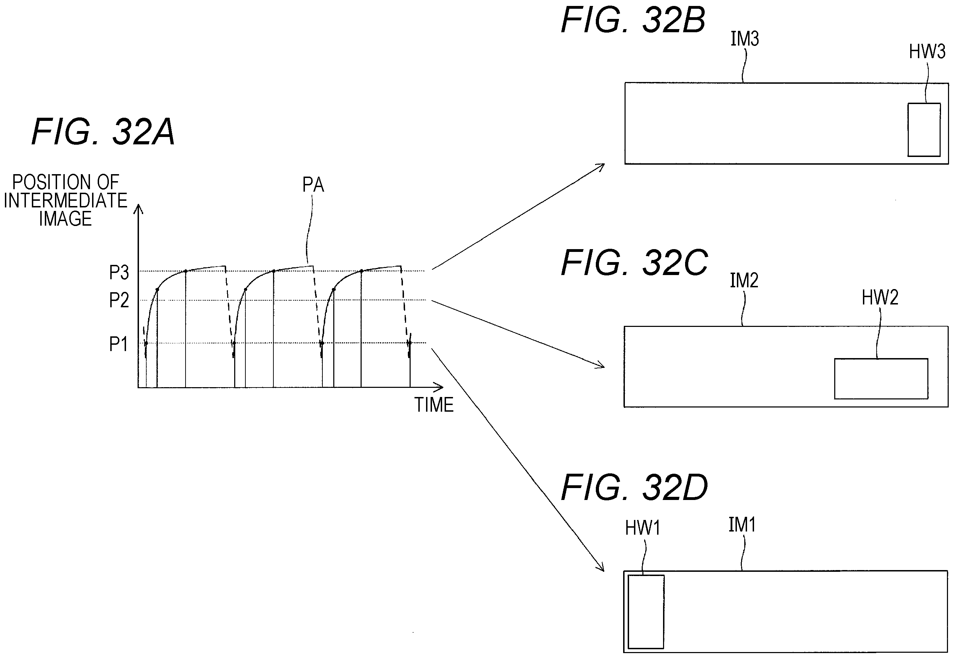

Fig. 32A corresponds to Fig. 30, Fig. 32B corresponds to the projection image IM3 or the frame HW3 of Fig. 8, Fig. 32C corresponds to the projection image IM2 or the frame HW2 of Fig. 8, and Fig. 32D corresponds to the projection image IM1 or the frame HW1 of Fig. 8. As is clear from Figs. 32A to 32D, when the functional area FA or the intermediate image TI of the rotating body 16a (or the 3D shape portion 116) is within a predetermined distance range around a display position P1, specifically, at the time of a display timing of a predetermined display zone determined based on the characteristic C1 illustrated in Fig. 31B according to the predetermined distance range, the projection image IM1 corresponds to a series of display images formed on the display surface 11a of the drawing device (display element) 11. Similarly, the projection image IM2 corresponds to a series of display images formed on the display surface 11a of the drawing device 11 when the functional area FA of the rotating body 16a (or the 3D shape portion 116) is within a distance range around a display position P2, and the projection image IM3 corresponds to a series of display images formed on the display surface 11a of the drawing device 11 when the functional area FA of the rotating body 16a (or the 3D shape portion 116) is within a distance range around a display position P3. In the case of being viewed in one cycle based on the movement of the intermediate image TI, first, the projection image IM1 or the frame HW1 corresponding to the display position P1 is displayed. Next, after the projection image IM2 or the frame HW2 corresponding to the display position P2 is displayed, the projection image IM3 or the frame HW3 corresponding to the display position P3 is displayed. When the above one cycle is visually short, switching of the projection images IM1, IM2, and IM3 becomes significantly fast, and the driver VD, who is the observer, recognizes that the frames HW1, HW2, and HW3 are simultaneously observed as images having depths. In the present embodiment, for example, when at least two of the display positions P1 to P3 are designated as adjacent display zones or near display zones, for example, there is a time zone in which the projection images of Figs. 32B and 32C, the projection images of Figs. 32C and 32D, or all the projection images of Figs. 32B, 32C, and 32D are simultaneously overlapped and displayed in an overlapping time range within a display time.

Hereinafter, an operation of the main controller 90 will be described with reference to Fig. 10 of the first embodiment. First, in the case of detecting the objects OB1, OB2, and OB3 using the environment monitoring unit 72, the main controller 90 generates display data corresponding to the frames HW1, HW2, and HW3 corresponding to the objects OB1, OB2, and OB3, and stores the generated display data in a storage unit (not illustrated) (step S11). After that, the main controller 90 performs data conversion such that the display data obtained in step S11 is distributed to the corresponding display zones DZ1 to DZn (step S12). Specifically, according to the positions of the objects OB1, OB2, and OB3, the corresponding frames HW1, HW2, and HW3 are allocated to any one of the display zones DZ1 to DZn (display zones DZa to DZc in the example of Fig. 8). Subsequently, the main controller 90 processes the display data corresponding to the frames HW1, HW2, and HW3 so as to conform to the allocated display zones DZ1 to DZn, and stores the display data in the storage unit (not illustrated) (step S13). This conforming includes image processing such as correcting an outline or arrangement of a frame image for each distance zone included in the display zone. Thereafter, the main controller 90 combines the display data conformed in step S13 with existing data (step S14). The display by the display zones DZ1 to DZn is simultaneously performed in parallel in spite of the time lag, and the display is performed in a short time so that an afterimage is left. Thus, when new objects OB1, OB2, and OB3 appear, it is necessary to reconfigure display content so that an existing object and a new object coexist, which is taken into account. Lastly, the main controller 90 outputs the display data obtained in step S14 to the display controller 18 in synchronization with an operation of the rotation drive unit 64, and causes the drawing device (display element) 11 to perform a display operation according to the functional area FA of the rotating body 16a (step S15).

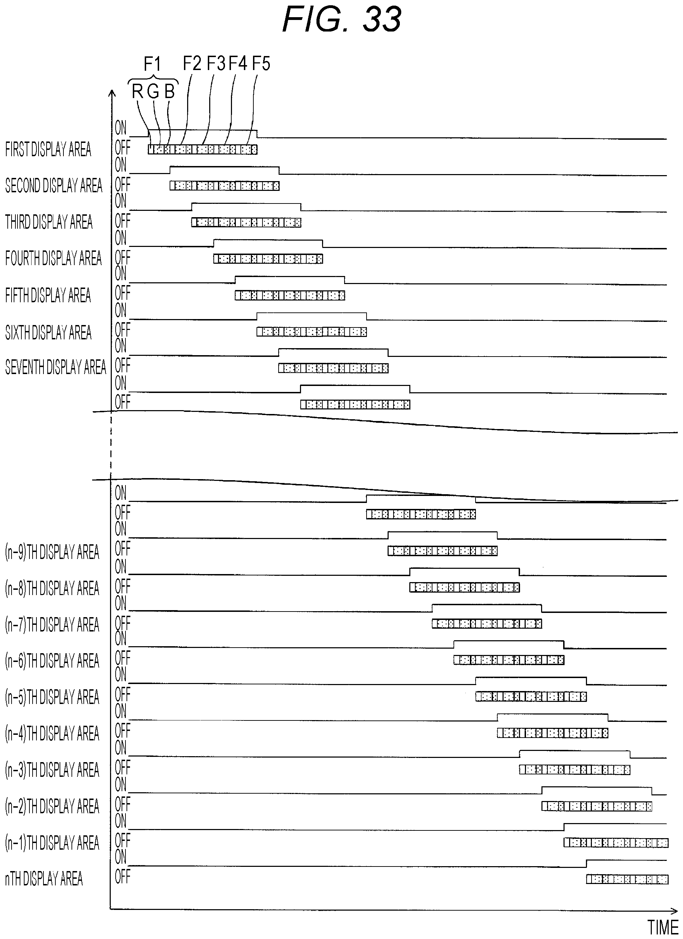

Fig. 33 is a diagram for description of an operation of the drawing device (display element) 11. In this case, a first display area to an nth display area arranged in a vertical direction correspond to the first to nth display zones DZ1 to DZn illustrated in Fig. 31B etc. In one cycle corresponding to one rotation of the rotating body 16a (or the 3D shape portion 116), corresponding to the first to nth display zones DZ1 to DZn, the display in the first to nth display areas is repeated on the display surface 11a of the drawing device (display element) 11. In each display area, signals F1 to F5 mean that the same display image is repeated in five sub-zones, and each of signals F1 to F5 includes R, G, and B signal components for color display.

According to the head-up display device 200 or the image display device 100 of the twelfth embodiment described above, since the projection distance by the virtual image formation optical system (the second projection optical system) 17 is changed substantially linearly according to the rotational position of the 3D shape portion 116, the projection distance is changed while keeping the distance sensitivity to the movement of the intermediate screen 19 (or the 3D shape portion 116) constant, and it is possible to perform uniform display at a long distance and a short distance.

Note that in the twelfth embodiment, it is possible to adopt the configuration of the diffusion unit 16 of the display device of the fifth embodiment.

### [Thirteenth Embodiment]

Hereinafter, a display device according to a thirteenth embodiment will be described. Note that the display device of the thirteenth embodiment is a modification of the display device of the first or twelfth embodiment, and items that are not particularly described are the same as those of the first embodiment etc.

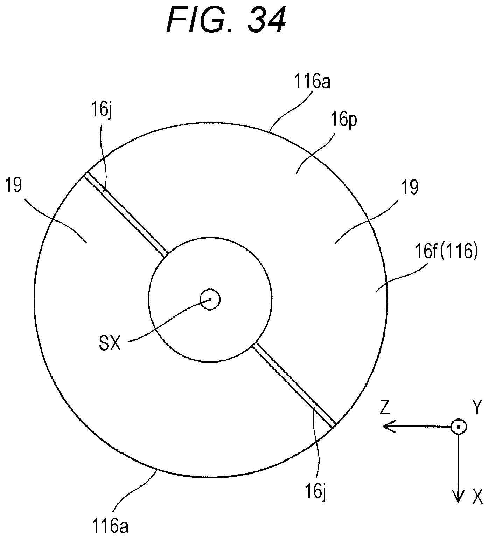

As illustrated in Fig. 34, in the case of the display device or a head-up display device of the thirteenth embodiment, the rotating body 16a includes a plurality of parts 116a, and includes two parts 116a in the illustrated example. Each of the parts 116a is provided with a 3D shape portion 116, which is a continuous surface that equally changes the projection distance, and the intermediate screen 19 is provided on the surface. In this case, one rotation of the rotating body 16a enables display for two cycles in the twelfth embodiment.

### [Others]

The display device or the head-up display device 200 as a specific embodiment has been described above. However, the display device according to the invention is not limited to the above description. For example, in the first embodiment, the arrangement of the image display device 100 can be inverted upside down, and the display screen 20 can be arranged at the upper part of the front window 8 or at a position of a sunvisor. In this case, the display screen 20 is disposed obliquely downward and forward with respect to the projection unit 10. Alternatively, the display screen 20 may be disposed at a position corresponding to a conventional mirror of the automobile.

In the above first embodiment etc., the intermediate screen 19 or the functional area FA is disposed so as to be substantially orthogonal to the optical axis AX direction of the main body optical system 13. However, the functional area FA can be forcibly inclined with respect to the optical axis AX. In this case, a projection image IM having no inclination or a predetermined inclination can be projected in combination with the virtual image formation optical system 17.

The first to nth display zones DZ1 to DZn described in the first embodiment may not be continuous over the entire range of the projection distance, and may be discontinuous and separated at portions corresponding to the boundaries of different sub-zones or distance zones LZ1 to LZn included in the display zone.

In the diffusion unit 16, the hollow frame body 16b may not be provided, and only the rotating body 16a may be provided. In this case, since the inclined connection surface 16k is formed at the inter-cycle step 16j, it is possible to suppress generation of sound due to the rotation of the rotating body 16a, and to stabilize the rotation of the rotating body 16a.

The functional area FA set in the rotating body 16a is not limited to the one illustrated in Fig. 3A etc., and may have various arrangements, shapes, etc. That is, the functional area FA may not be set at a separate position on the rotating body 16a, and can be set at a continuous desired position on the rotating body 16a.

The number of divisions of the projection distance of the projection image IM is not limited to three, and may be set to four or more depending on the application.

In the above embodiment, the outline of the display screen 20 is not limited to a rectangle, but may be set to various shapes.

The imaging optical system 15 and the virtual image formation optical system 17 illustrated in Fig. 2 etc. are merely examples, and the optical configurations of the imaging optical system 15 and the virtual image formation optical system 17 can be appropriately changed.

In the above description, the object OB present in front of the vehicle body 2 is detected by the environment monitoring unit 72, and related information images such as the frames HW1, HW2, and HW3 corresponding to the arrangement of the object OB are displayed on the image display device 100. However, regardless of the presence or absence of the object OB, accompanying driving-related information can be acquired using the communication network, and such driving-related information can be displayed on the image display device 100. For example, a display warning a car, an obstacle, etc. present in a blind spot can be performed.

The display device of the present invention can be applied not only to a head-up display (HUD) device mounted on a car or other moving object, but also to a head-mounted device that performs 3D display, a wearable display device, etc.

In the display device of the seventh embodiment, an inclined state of the surface areas 16fa to 16fd provided on the outer peripheral optical portion 16p of the rotating body 16a is not limited to an inclined state exemplified by the flat portions C2a to C2d illustrated in Fig. 21A, and may be appropriately set to a degree of inclination. Further, the surface areas 16fa to 16fd of the outer peripheral optical portion 16p may have a flat surface without inclination and perpendicular to the optical axis AX.

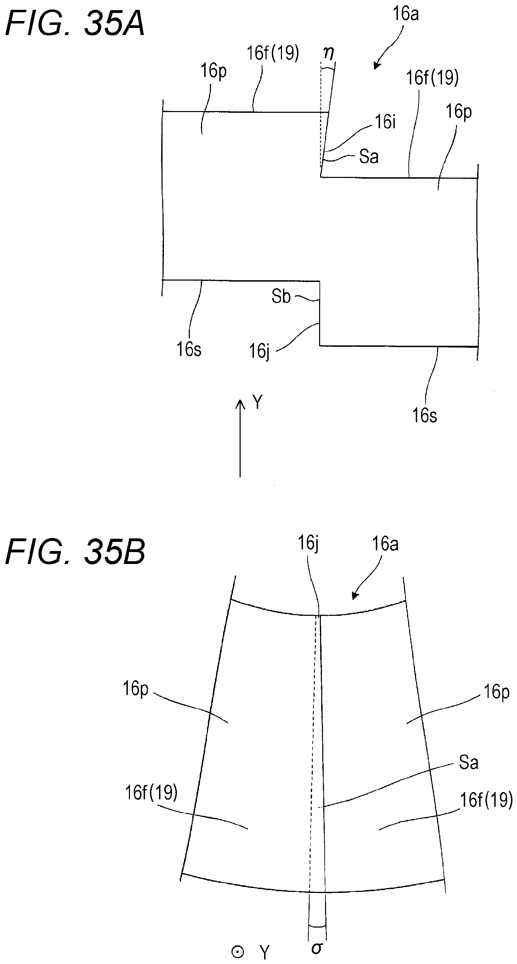

As illustrated in Fig. 35A and Fig. 35B, a surface Sa on the light source side or the incident side of the inter-cycle step 16j provided on the rotating body 16a of the diffusion unit 16 can be inclined with respect to the Y direction or the optical axis AX and in an overhanging state. In other words, in the case of viewing from the light source side, that is, from the +Y side, along the optical axis AX direction, both ends of the surface 16f are in an overlapping state, and an overlap angle σ is about several degrees to ten degrees even though the overlap angle depends on the size of the diffusion unit 16 and the spread of the functional area FA. As a result, the overlap angle σ of the intermediate screen 19 provided in the both ends of the surface 16f is about several degrees to ten degrees. In this case, an operation start of the end of the intermediate screen 19 on the incident side or the upper side of Fig. 35A is earlier than an operation start of the end of the intermediate screen 19 on the emission side or the lower side of Fig. 35A. As illustrated in Fig. 35A, instead of making the overlap angle σ of the surface 16f or the intermediate screen 19 constant, an inclination angle η of the surface Sa of the inter-cycle step 16j can be made substantially constant. In this case, an overlap width or amount of the intermediate screen 19 viewed from the +Y side can be made uniform.

By overlapping the both ends of the surface 16f as described above, the intermediate screen 19 is disposed so as to be superimposed on the inter-cycle step 16j when viewed from the optical axis AX direction, and stray light generated by image light incident on the inter-cycle step 16j can be suppressed. In other words, it is possible to inhibit light entering and passing through the inter-cycle step 16j from forming a virtual image in front of the driver VD as stray light so that a ghost image is observed.

With regard to a surface Sb on the emission side on the side opposite to the light source where the intermediate screen 19 is not provided, it is desirable that the surface 16f is disposed so as to overlap the surface or the inter-cycle step 16j on the light source side or incident side which appears to overlap.

In addition, in Fig. 35A, a support of the intermediate screen 19 or the 3D shape portion 116 includes a slab-shaped plate material, and a plate material is connected between adjacent areas in the inter-cycle step 16j. However, the support of the intermediate screen 19 may include a thin plate or a sheet. In this case, it is possible to consider a state in which the members included in the intermediate screen 19 are not connected at the inter-cycle step 16j. In such a case, the surface Sa for connection illustrated in Fig. 35A may not exist and may be hollow.

Further, for example, when the step amount becomes large, there may be a case where stray light is generated unless the overlap amount or the overlap amount width is set to be large. In this instance, when the overlap amount is set to be excessively large, there may be a problem that an unused area of a surface of the intermediate screen 19 on the lower side of Fig. 35A increases, and luminance decreases. In such a case, it is possible to remove stray light using a method of adjusting an angular position of area switching of the inter-cycle step 16j in consideration of the overlap amount and ensuring the luminance or a method of conversely extremely reducing or eliminating the overlap amount to paint a part corresponding to the surface Sa of Fig. 35A black or provide an opaque member that becomes a lid in the case of a cavity. These methods are means that can be used regardless of whether the step amount is large or small.

## Claims

1. A virtual image display device comprising:
a first projection optical system configured to project image light formed by a drawing device (11);
an intermediate screen (19) configured to diffuse light at a projection position by the first projection optical system;
a second projection optical system configured to enlarge and project an intermediate image (TI) formed on the intermediate screen (19), wherein the second projection optical system is configured to convert the intermediate image (TI) into a virtual image; and
a drive unit configured to rotate the intermediate screen (19) around a reference axis (SX) to move a functional area (FA) of the intermediate screen (19) in an optical axis (AX) direction,
wherein the intermediate screen (19) has a three-dimensional (3D) shape portion (116) whose position of the functional area (FA) in the optical axis (AX) direction changes by rotation,
wherein the intermediate screen (19) is supported by a rotating body including the 3D shape portion (116),
wherein the rotating body has an equal thickness in the optical axis (AX) direction.

2. The virtual image display device according to claim 1, wherein the position of the functional area (FA) in the optical axis (AX) direction continuously changes due to rotation in the 3D shape portion (116).

3. The virtual image display device according to claim 1 or 2, wherein the 3D shape portion (116) is formed along a continuous spiral surface.

4. The virtual image display device according to any one of claims 1 to 3, wherein the intermediate screen (19) is formed in a range corresponding to one cycle or a plurality of cycles.

5. The virtual image display device according to any one of claims 1 to 4, wherein the rotating body has a step in the optical axis (AX) direction at a position corresponding to an end of the 3D shape portion (116).

6. The virtual image display device according to claim 5, wherein the rotating body has a connection surface that connects the step and is inclined with respect to a plane including the reference axis (SX) around which the intermediate screen (19) is rotated.

7. The virtual image display device according to any one of claims 1 and 3 to 6, further comprising
a step portion (16i) configured to change a projection distance stepwise at least partially, wherein the position of the 3D shape portion (116) in the optical axis (AX) direction changes as a predetermined linear function with respect to a rotational position of the 3D shape portion (116).

8. The virtual image display device according to claim 7, wherein in the 3D shape portion (116), an area in which the projection distance corresponds to a shortest distance side has a planar shape in which the position of the intermediate screen (19) in the optical axis (AX) direction does not change with respect to rotation of the 3D shape portion (116).

9. The virtual image display device according to any one of claims 7 to 8, wherein the 3D shape portion (116) is divided into a plurality of flat areas, each of which covers the functional area (FA) along a circumferential direction of rotation of the intermediate screen (19), and the step portion (16i) is provided between the plurality of flat areas.

10. The virtual image display device according to claim 9, wherein the 3D shape portion (116) has the step portion (16i) on a side corresponding to a short distance.

11. The virtual image display device according to any one of claims 6 to 10, wherein the intermediate screen (19) is disposed so as to overlap with at least one of the step portion (16i) and the step when viewed from the optical axis (AX) direction.

12. The virtual image display device according to any one of claims 1 to 6, wherein the reference axis (SX) around which the intermediate screen (19) is rotated is an axis of the 3D shape portion (116) and is disposed to be inclined with respect to the optical axis (AX) direction.

13. The virtual image display device according to any one of the previous claims, wherein an object (OB) present in a detection area (VF) is detected, and a related information image is additionally projected on the detected object (OB) as a virtual image.

## Patentansprüche

1. Virtuelle Bildanzeigevorrichtung, umfassend:
ein erstes optisches Projektionssystem, das so konfiguriert ist, dass es von einer Zeichenvorrichtung (11) erzeugtes Bildlicht projiziert;
einen Zwischenbildschirm (19), der so konfiguriert ist, dass er Licht an einer Projektionsposition durch das erste optische Projektionssystem streut;
ein zweites optisches Projektionssystem, das so konfiguriert ist, dass es ein auf dem Zwischenbildschirm (19) erzeugtes Zwischenbild (TI) vergrößert und projiziert, wobei das zweite optische Projektionssystem so konfiguriert ist, dass es das Zwischenbild (TI) in ein virtuelles Bild umwandelt; und
eine Antriebseinheit, die so konfiguriert ist, dass sie den Zwischenbildschirm (19) um eine Referenzachse (SX) dreht, um einen Funktionsbereich (FA) des Zwischenbildschirms (19) in Richtung einer optischen Achse (AX) zu bewegen,
wobei der Zwischenbildschirm (19) einen dreidimensionalen (3D) Formteil (116) aufweist, dessen Position des Funktionsbereichs (FA) in Richtung der optischen Achse (AX) sich durch Drehung ändert,
wobei der Zwischenbildschirm (19) von einem Drehkörper getragen wird, der den 3D-Formteil (116) enthält,
wobei der Drehkörper eine gleiche Dicke in Richtung der optischen Achse (AX) aufweist.

2. Virtuelle Bildanzeigevorrichtung nach Anspruch 1, wobei sich die Position des Funktionsbereichs (FA) in Richtung der optischen Achse (AX) durch Drehung des 3D-Formteils (116) kontinuierlich ändert.

3. Virtuelle Bildanzeigevorrichtung nach Anspruch 1 oder 2, wobei der 3D-Formteil (116) entlang einer kontinuierlichen Spiralfläche ausgebildet ist.

4. Virtuelle Bildanzeigevorrichtung nach einem der Ansprüche 1 bis 3, wobei der Zwischenbildschirm (19) in einem Bereich ausgebildet ist, der einem Umlauf oder einer Vielzahl von Umläufen entspricht.

5. Virtuelle Bildanzeigevorrichtung nach einem der Ansprüche 1 bis 4, wobei der Drehkörper an einer Position, die einem Ende des 3D-Formteils (116) entspricht, eine Stufe in Richtung der optischen Achse (AX) aufweist.

6. Virtuelle Bildanzeigevorrichtung nach Anspruch 5, wobei der Drehkörper eine Verbindungsfläche aufweist, die die Stufe verbindet und in Bezug auf eine Ebene geneigt ist, die die Referenzachse (SX) enthält, um die der Zwischenbildschirm (19) gedreht wird.

7. Virtuelle Bildanzeigevorrichtung nach einem der Ansprüche 1 und 3 bis 6, ferner umfassend
einen Stufenabschnitt (16i), der so konfiguriert ist, dass er einen Projektionsabstand zumindest teilweise schrittweise ändert, wobei sich die Position des 3D-Formteils (116) in Richtung der optischen Achse (AX) als eine vorbestimmte lineare Funktion in Bezug auf eine Drehposition des 3D-Formteils (116) ändert.

8. Virtuelle Bildanzeigevorrichtung nach Anspruch 7, wobei in dem 3D-Formteil (116) ein Bereich, in dem der Projektionsabstand einer Seite mit dem kürzesten Abstand entspricht, eine ebene Form aufweist, in der sich die Position des Zwischenbildschirms (19) in Richtung der optischen Achse (AX) in Bezug auf die Drehung des 3D-Formteils (116) nicht ändert.

9. Virtuelle Bildanzeigevorrichtung nach einem der Ansprüche 7 bis 8, wobei der 3D-Formteil (116) in eine Vielzahl von flachen Bereichen unterteilt ist, von denen jeder den Funktionsbereich (FA) entlang einer Umfangsdrehrichtung des Zwischenbildschirms (19) abdeckt, und der Stufenabschnitt (16i) zwischen der Vielzahl von flachen Bereichen vorgesehen ist.

10. Virtuelle Bildanzeigevorrichtung nach Anspruch 9, wobei der 3D-Formteil (116) den Stufenabschnitt (16i) auf einer Seite aufweist, die einem kurzen Abstand entspricht.

11. Virtuelle Bildanzeigevorrichtung nach einem der Ansprüche 6 bis 10, wobei der Zwischenbildschirm (19) so angeordnet ist, dass er sich mit mindestens einem von Stufenabschnitt (16i) und Stufe überlagert, wenn er aus der Richtung der optischen Achse (AX) betrachtet wird.

12. Virtuelle Bildanzeigevorrichtung nach einem der Ansprüche 1 bis 6, wobei die Referenzachse (SX), um die der Zwischenbildschirm (19) gedreht wird, eine Achse des 3D-Formteils (116) ist und so angeordnet ist, dass sie in Bezug auf die Richtung der optischen Achse (AX) geneigt ist.

13. Virtuelle Bildanzeigevorrichtung nach einem der vorhergehenden Ansprüche, wobei ein in einem Erfassungsbereich (VF) vorhandenes Objekt (OB) erfasst wird und ein zugehöriges Informationsbild zusätzlich auf das erfasste Objekt (OB) als virtuelles Bild projiziert wird.

## Revendications

1. Dispositif d'affichage d'images virtuelles comprenant
un premier système optique de projection configuré pour projeter une lumière d'image formée par un dispositif de traçage (11) ;
un écran intermédiaire (19) configuré pour diffuser de la lumière à une position de projection par le premier système optique de projection ;
un second système optique de projection configuré pour agrandir et projeter une image intermédiaire (TI) formée sur l'écran intermédiaire (19), le second système optique de projection étant configuré pour convertir l'image intermédiaire (TI) en une image virtuelle ; et
une unité d'entraînement configurée pour faire tourner l'écran intermédiaire (19) autour d'un axe de référence (SX) afin de déplacer une zone fonctionnelle (FA) de l'écran intermédiaire (19) dans une direction d'axe optique (AX),
dans lequel l'écran intermédiaire (19) comporte une partie (116) de forme tridimensionnelle (3D) dont la position de la zone fonctionnelle (FA) dans la direction d'axe optique (AX) change par rotation,
dans lequel l'écran intermédiaire (19) est supporté par un corps rotatif comprenant la partie de forme 3D (116),
dans lequel le corps rotatif a une même épaisseur dans la direction d'axe optique (AX).

2. Dispositif d'affichage d'images virtuelles selon la revendication 1, dans lequel la position de la zone fonctionnelle (FA) dans la direction d'axe optique (AX) change continuellement en raison de la rotation de la partie de forme 3D (116).

3. Dispositif d'affichage d'images virtuelles selon la revendication 1 ou 2, dans lequel la partie de forme 3D (116) est formée le long d'une surface en spirale continue.

4. Dispositif d'affichage d'images virtuelles selon l'une des revendications 1 à 3, dans lequel l'écran intermédiaire (19) est formé dans une zone correspondant à un cycle ou à une pluralité de cycles.

5. Dispositif d'affichage d'images virtuelles selon l'une quelconque des revendications 1 à 4, dans lequel le corps rotatif présente un gradin dans la direction d'axe optique (AX) à une position correspondant à une extrémité de la partie de forme 3D (116).

6. Dispositif d'affichage d'images virtuelles selon la revendication 5, dans lequel le corps rotatif a une surface de connexion qui relie le gradin et est inclinée par rapport à un plan comprenant l'axe de référence (SX) autour duquel l'écran intermédiaire (19) est tourné.

7. Dispositif d'affichage d'images virtuelles selon l'une des revendications 1 et 3 à 6, comprenant en outre une partie en gradin (16i) configurée pour modifier progressivement, au moins partiellement, une distance de projection, la position de la partie de forme 3D (116) dans la direction d'axe optique (AX) variant comme une fonction linéaire prédéterminée par rapport à une position de rotation de la partie de forme 3D (116).

8. Dispositif d'affichage d'images virtuelles selon la revendication 7, dans lequel, dans la partie de forme 3D (116), une zone dans laquelle la distance de projection correspond à un côté de plus courte distance a une forme plane dans laquelle la position de l'écran intermédiaire (19) dans la direction d'axe optique (AX) ne change pas par rapport à la rotation de la partie de forme 3D (116).

9. Dispositif d'affichage d'images virtuelles selon l'une des revendications 7 à 8, dans lequel la partie de forme 3D (116) est divisée en une pluralité de zones plates, chacune couvrant la zone fonctionnelle (FA) le long d'une direction de rotation circonférentielle de l'écran intermédiaire (19), et la partie en gradin (16i) est prévue entre la pluralité de zones plates.

10. Dispositif d'affichage d'images virtuelles selon la revendication 9, dans lequel la partie de forme 3D (116) a la partie en gradin (16i) sur un côté correspondant à une courte distance.

11. Dispositif d'affichage d'images virtuelles selon l'une des revendications 6 à 10, dans lequel l'écran intermédiaire (19) est disposé de manière à se chevaucher avec au moins l'une de la partie en gradin (16i) et du gradin lorsqu'il est vu depuis la direction d'axe optique (AX).

12. Dispositif d'affichage d'images virtuelles selon l'une des revendications 1 à 6, dans lequel l'axe de référence (SX) autour duquel l'écran intermédiaire (19) est tourné est un axe de la partie de forme 3D (116) et est disposé de manière à être incliné par rapport à la direction d'axe optique (AX).

13. Dispositif d'affichage d'images virtuelles selon l'une des revendications précédentes, dans lequel un objet (OB) présent dans une zone de détection (VF) est détecté, et une image d'informations associées est en outre projetée sur l'objet détecté (OB) en tant qu'image virtuelle.
